(19) Europäisches Patentamt
European Patent Office
Office européen des brevets

(11)  **EP 3 957 094 B1**

(12)  **EUROPÄISCHE PATENTSCHRIFT**

(45) Veröffentlichungstag und Bekanntmachung des Hinweises auf die Patenterteilung:
**11.10.2023   Patentblatt 2023/41**

(21) Anmeldenummer: **20717865.8**

(22) Anmeldetag: **08.04.2020**

(51) Internationale Patentklassifikation (IPC):
**H04W 4/46** (2018.01)   **G05D 1/02** (2020.01)
**B60W 30/165** (2020.01)   **G08G 1/00** (2006.01)

(52) Gemeinsame Patentklassifikation (CPC):
**H04W 4/46; G08G 1/22**

(86) Internationale Anmeldenummer:
**PCT/EP2020/060051**

(87) Internationale Veröffentlichungsnummer:
**WO 2020/212231 (22.10.2020 Gazette 2020/43)**

(54) **VERFAHREN ZUR KONTROLLE EINER FAHRZEUGKOLONNE MITTELS FAHRZEUG-ZU-FAHRZEUG-KOMMUNIKATION**

METHOD FOR MONITORING A VEHICLE CONVOY BY MEANS OF VEHICLE-TO-VEHICLE COMMUNICATION

PROCÉDÉ DE CONTRÔLE D'UNE COLONNE DE VÉHICULES AU MOYEN D'UNE COMMUNICATION DE VÉHICULE À VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2019   DE 102019205435**
**17.07.2019   DE 102019210559**

(43) Veröffentlichungstag der Anmeldung:
**23.02.2022   Patentblatt 2022/08**

(73) Patentinhaber:
• **Technische Universität Dresden**
**01069 Dresden (DE)**
• **Vodafone GmbH**
**40549 Düsseldorf (DE)**

(72) Erfinder:
• **FRANCHI, Norman**
**01277 Dresden (DE)**
• **GONZALEZ RODRIGUEZ, Arturo Antonio**
**01097 Dresden (DE)**
• **CALDENHOVEN, Jürgen**
**40547 Düsseldorf (DE)**

(74) Vertreter: **Eisenführ Speiser**
**Patentanwälte Rechtsanwälte PartGmbB**
**Johannes-Brahms-Platz 1**
**20355 Hamburg (DE)**

(56) Entgegenhaltungen:
**DE-A1-102016 011 325**

• **DOLK VICTOR S ET AL: "Event-Triggered Control for String-Stable Vehicle Platooning", IEEE TRANSACTIONS ON INTELLIGENT TRANSPORTATION SYSTEMS, IEEE, PISCATAWAY, NJ, USA, Bd. 18, Nr. 12, 1. Dezember 2017 (2017-12-01), Seiten 3486-3500, XP011674275, ISSN: 1524-9050, DOI: 10.1109/TITS.2017.2738446 [gefunden am 2017-12-07]**

**Beschreibung**

Die Erfindung betrifft ein Verfahren zur Kontrolle einer Fahrzeugkolonne mit mindestens zwei Fahrzeugen mittels Fahrzeug-zu-Fahrzeug-Kommunikation. Unter einer Fahrzeug-zu-Fahrzeug-Kommunikation wird dabei neben einer direkten Kommunikation zwischen zwei Fahrzeugen eine Kommunikation über ein Kommunikationsnetzwerk verstanden, bei der die Fahrzeuge über das Netzwerk miteinander kommunizieren. Bei dem Netzwerk kann es sich insbesondere um ein Mobilfunknetzwerk handeln.

Das Fahren mehrerer unmittelbar aufeinanderfolgender Fahrzeuge innerhalb einer Fahrzeugkolonne (im Englischen auch als "platooning" bezeichnet) kann zu einer erheblichen Einsparung des Kraftstoffverbrauchs der dem Führungsfahrzeug der Fahrzeugkolonne dicht nachfolgenden Fahrzeuge führen und auch die Verkehrseffizienz erhöhen. Die Reduzierung des Kraftstoffverbrauchs ist dabei umso größer, je kleiner der Abstand zwischen den Fahrzeugen gewählt bzw. über einen längeren Zeitraum eingehalten werden kann. Die Verkehrseffizienz ist erhöht, da kürzere Abstände zwischen Fahrzeugen einen höheren Fahrzeugdurchsatz auf Straßen ermöglicht.

Eine zumindest teilweise automatisierte Kontrolle der gewünschten Wegabstände und Geschwindigkeiten als kinematische Zielvorgaben kann mittels eines Regelkreises für die Steuerung eines jeden Fahrzeugs der Fahrzeugkolonne erreicht werden. Im Stand der Technik sind adaptive-cruise-control Systeme (ACC) bekannt, bei denen ein Regelkreis eines Fahrzeugs Sensordaten eines Radar- und/oder Lidarsystems, das sich in oder auf dem Fahrzeug befindet und den Wegabstand zu einem vorausfahrenden Fahrzeug und/oder die Geschwindigkeit des Fahrzeugs erfassen kann, als Eingabegrößen berücksichtigt. Bei zu kleinen Wegabständen zwischen den Fahrzeugen einer Fahrzeugkolonne, die durch ein ACC-System geregelt wird, können jedoch kleine Störungen oder Abweichungen von den kinematischen Zielvorgaben, die beispielsweise durch eine unvorhergesehen Bremsvorgang hervorgerufen werden, entlang der Fahrzeugkolonne fortpflanzen und verstärken. Eine solche Instabilität gefährdet dann die Sicherheit, Effizienz und Kontrollierbarkeit der Fahrzeugkolonne.

Eine Verbesserung der Kolonnenstabilität bei kleinen Wegabständen und hohen Geschwindigkeiten kann durch ein cooperative-adaptive-cruise-control System (CACC) erreicht werden, bei dem ein Regelkreis zusätzlich zu den Sensordaten eines Fahrzeugs auch kinematische Kontrollparameter des unmittelbar vorausfahrenden Fahrzeugs, z. B. Werte für die momentane oder beabsichtigte Beschleunigung des unmittelbar vorausfahrenden Fahrzeugs, als Eingabegrößen berücksichtigt. Mit diesen zusätzlichen Informationen lassen sich kleinere Wegabstände zwischen den Fahrzeugen bei höheren Geschwindigkeiten und damit auch größere Kraftstoffeinsparungen erreichen bzw. sich ein höherer Verkehrsdurchsatz ergibt.

Allerdings hängen die mittels eines CACC-Systems tatsächlich realisierbaren Wegabstände und Geschwindigkeiten unter Gewährleistung der Kolonnenstabilität stark von der Qualität und Granularität der für die Fahrzeug-zu-Fahrzeug-Kommunikation zur Verfügung stehenden Übertragungsressourcen ab, mit denen die kinematischen Kontrollparameter zwischen den Fahrzeugen ausgetauscht und aktualisiert werden können. In Mobilfunknetzen ist die Periodendauer einer Datenübertragungssitzung jedoch stets größer als eine bestimmte Minimaldauer. Beispielsweise beträgt die kleinste mögliche Periodendauer einer semi-persistenten Datenübertragungssitzung im LTE-Standard (Long Term Evolution) 20 ms. Die minimale Periodendauer entspricht dann einer Mindestverzugszeit, mit der kinematischen Kontrollparameter mittels einer semi-persistenten Datenübertragungssitzung von Fahrzeug zu Fahrzeug aktualisiert werden können. Dies begrenzt auch den kleinsten möglichen vorgebbaren Wegabstand zwischen zwei unmittelbar aufeinanderfolgenden Fahrzeugen der Fahrzeugkolonne. Oftmals wird die Periodendauer in Ermangelung eines geeigneten Modells ad hoc auch größer gewählt als es die Reisezielvorgaben und fahrzeugspezifischen Steuerparameter zulassen würden. Eine zu große Periodendauer bzw. Verzugszeit kann allerdings dazu führen, dass ein CACC-System effektiv zu einem ACC-System degradiert wird und damit Bedingungen für die Kolonnenstabilität nicht mehr eingehalten werden können.

Die Veröffentlichung Victor S. Dolk et al, "Event-Triggered Control for String-Stable Vehicle Platooning", IEEE Transactions on Intelligent Transportation Systems, vol. 18, no. 12, Seite 3486 (XP011674275) beschreibt CACC-Regelung, bei der Übertragung zwischen den Fahrzeugen einer Kolonne ereignisgesteuert vorgenommen werden, um unnötige Übertragungen zu vermeiden.

Ziel der vorliegenden Erfindung ist es, ein effizientes Verfahren vorzuschlagen, mit dem sich unter Gewährleistung der Kolonnenstabilität besonders kleine Wegabstände zwischen den Fahrzeugen einer Fahrzeugkolonne bei gleichzeitig hohen Geschwindigkeiten erreichen lassen.

Erfindungsgemäß wird die Aufgabe mit den in Anspruch 1 genannten Merkmalen gelöst. Vorteilhafte Varianten ergeben sich aus den in den Unteransprüchen genannten Merkmalen.

Die Erfindung betrifft ein Verfahren zur Kontrolle einer Fahrzeugkolonne mit mindestens zwei Fahrzeugen, die mindestens ein Fahrzeugpaar bilden, wobei das mindestens eine Fahrzeugpaar ein erstes Fahrzeug und ein zweites Fahrzeug umfasst und das erste Fahrzeug dem zweiten Fahrzeug in der Fahrzeugkolonne unmittelbar vorausgehend angeordnet ist, wobei die mindestens zwei Fahrzeuge der Fahrzeugkolonne jeweils mit einem Kommunikationssystem, das eingerichtet ist, um

mittels Fahrzeug-zu-Fahrzeug-Kommunikation Informationen zu senden und/oder zu empfangen, und einer Messvorrichtung, die eingerichtet ist, um kinematische Zustandsparameter zu erfassen, gebildet sind, und das zweite Fahrzeug eine Regelung der Steuerung des zweiten Fahrzeugs unter Berücksichtigung durch das erste Fahrzeug versendeter und
von dem zweiten Fahrzeug empfangener Werte für mindestens einen kinematischer Kontrollparameter mit dem Ziel durchführt, die mittels der mindestens einen Messvorrichtung des zweiten Fahrzeugs des mindestens einen Fahrzeugpaars gemessenen Werte für mindestens einen kinematischen Zustandsparameter an kinematischen Zielvorgaben anzugleichen. Bei dem Verfahren werden weiterhin folgende Schritte ausgeführt:

(a) Es wird mindestens eine maximale Verzugszeit für die Fahrzeug-zu-Fahrzeug-Kommunikation so bestimmt, dass mindestens eine auf einem cooperative-adaptive-cruise-control (CACC)-Modell basierende Bedingung für die Einhaltung der Kolonnenstabilität unter Berücksichtigung von kinematischen Zielvorgaben und fahrzeugspezifischen Steuerparameter erfüllt ist.
(b) Es werden Übertragungsressourcen für die Fahrzeug-zu-Fahrzeug-Kommunikation zwischen dem ersten und dem zweiten Fahrzeug des mindestens einen Fahrzeugpaars bestimmt, wobei die Übertragungsressourcen mit mindestens einer Datenübertragungssitzung unter Berücksichtigung der mindestens einen maximalen Verzugszeit gebildet sind.
(c) Mittels der bestimmten Übertragungsressourcen für die Fahrzeug-zu-Fahrzeug-Kommunikation werden Werte für mindestens einen kinematischen Kontrollparameter als Informationen mit einem zeitlichen Abstand, der kleiner als die bestimmte mindestens eine maximale Verzugszeit ist, von dem ersten Fahrzeug des mindestens einen Fahrzeugpaars gesendet und von dem zweiten Fahrzeug des mindestens einen Fahrzeugpaars empfangen.

**[0010]** Mit dem erfindungsgemäßen Verfahren können insbesondere Übertragungsressourcen für die Fahrzeug-zu-Fahrzeug-Kommunikation besonders effizient genutzt werden. Unter dem Begriff "Fahrzeug-zu-Fahrzeug-Kommunikation" soll hierbei auch eine Kommunikation zwischen den Fahrzeugen mittels eines Netzwerks verstanden werden, also eine "Fahrzeug-zu-Netzwerk-zu-Fahrzeug-Kommunikation". Dabei ermöglicht das Verfahren eine systematische Bestimmung der Verzugszeiten bzw. zeitlichen Abstände, mit denen Informationen von Fahrzeug zu Fahrzeug gesendet bzw. in einem Regelkreis eines Fahrzeugs aktualisiert werden können. Mit der Gewährleistung der Kolonnenstabilität bei der Bestimmung der maximalen Verzugszeiten bzw. zeitlichen Abstände der über die Fahrzeug-zu-Fahrzeug-Kommunikation gesendeten bzw. empfangenen Informationen können besonders kleine Wegabstände zwischen den Fahrzeugen bei hohen Geschwindigkeiten erreicht werden. Die Einhaltung der Kolonnenstabilität erhöht außerdem den Fahrkomfort und gewährleistet eine stabile Kontrolle der Fahrzeugkolonne über einen längeren Zeitraum. Es wird somit ein adaptives Kommunikationsverfahren zur dynamischen Kontrolle einer Fahrzeugkolonne realisiert.

**[0011]** Bei den Übertragungsressourcen kann es sich insbesondere um Zeit- und/oder Frequenzressourcen, aber auch um Energieressourcen, Kodierungsressourcen und/oder eine Modulation handeln.

**[0012]** Zumindest das erste Fahrzeug des mindestens einen Fahrzeugpaars kann eine Information über die für die Fahrzeug-zu-Fahrzeug-Kommunikation bestimmten Übertragungsressourcen empfangen. Nach Maßgabe dieser Informationen können die Werte für den mindestens einen kinematischen Kontrollparameter von dem ersten Fahrzeug gesendet und von dem zweiten Fahrzeug empfangen werden.

**[0013]** In einer Ausgestaltung der Erfindung können die kinematischen Zielvorgaben unter Berücksichtigung von Reisezielparametern und/oder fahrzeugspezifischen Steuerparametern bestimmt werden, die typischerweise zumindest teilweise von Fahrzeugen der Fahrzeugkolonne bereitgestellt werden. Hierdurch wird eine besonders genaue Anpassung der Fahrzeug-zu-Fahrzeug-Kommunikation an den Reiseverlauf und an die technische Ausstattung bzw. Kondition der Fahrzeuge ermöglicht.

**[0014]** Vorzugsweise werden die Schritte des erfindungsgemäßen Verfahrens für alle Fahrzeugpaare der Fahrzeugkolonne, die mit einem ersten Fahrzeug der Fahrzeugkolonne und einem in der Fahrzeugkolonne dem ersten Fahrzeug unmittelbar nachfolgend angeordneten zweiten Fahrzeug der Fahrzeugkolonne gebildet werden können, durchgeführt. Bei einer mit N Fahrzeugen gebildeten Fahrzeugkolonne, können genau N-1 solche Fahrzeugpaare bestimmt werden. Die mindestens zwei Fahrzeuge bilden somit typischerweise mindestens ein Fahrzeugpaar.

**[0015]** Eine Fahrzeugkolonne kann mit einem vordersten Führungsfahrzeug, das in Fahrtrichtung am Anfang der Fahrzeugkolonne angeordnet ist, einem Organisationsfahrzeug, das eingerichtet ist, um über die Fahrzeug-zu-Fahrzeug-Kommunikation Informationen zwischen dem Organisationsfahrzeug und allen anderen Fahrzeugen der Fahrzeugkolonne auszutauschen, und/oder einem Netzwerkfahrzeug, das eingerichtet ist, um über die Fahrzeug-zu-Netzwerk-Kommunikation Informationen zwischen dem Netzwerkfahrzeug und einer Basisstation eines mobilen Netzwerks auszutauschen, gebildet sein. Dabei können ein Führungsfahrzeug, ein Organisationsfahrzeug, und/oder ein Netzwerkfahrzeug auch mit demselben Fahrzeug bzw. durch dasselbe Fahrzeug der Fahrzeugkolonne gebildet sein.

**[0016]** Ein Fahrzeugkolonnenmanager kann zumindest zeitweise durch eine als Computer ausgeführte Recheneinheit, die ein entsprechendes Computerpro-

gramm ausführt, und/oder durch einen menschlichen Operator, der die Recheneinheit bedient, gebildet sein. Der Fahrzeugkolonnenmanager kann dabei auf einem Führungsfahrzeug, einem Organisationsfahrzeug, und/oder einem Netzwerkfahrzeug angeordnet sein. Der Fahrzeugkolonnenmanager kann aber auch Informationen mit einem oder mehreren Fahrzeugen der Fahrzeugkolonne über eine Basisstation eines mobilen Netzwerks austauschen und dabei auf keinem der Fahrzeuge der Fahrzeugkolonne angeordnet sein.

Die Formation der Fahrzeugkolonne kann Schritte umfassen, die bereits vor Schritt (a) des erfindungsgemäßen Verfahrens und/oder erneut nach Eintritt eines externen Ereignisses beginnen. Beispielsweise kann die Formation einer Fahrzeugkolonne damit beginnen, dass Fahrzeuge mittels Fahrzeug-zu-Fahrzeug- oder mittels Fahrzeug-zu-Netzwerk-Kommunikation eine Absichtserklärung mit anderen Fahrzeugen eine Fahrzeugkolonne bilden zu wollen, an einen Fahrzeugkolonnenmanager senden. Die Absichtserklärung kann dabei mit zumindest einer Positionsangabe, zumindest einer Geschwindigkeitsangabe, zumindest einer fahrzeugspezifischen Reisezielangabe und/oder zumindest einem fahrzeugspezifischen Steuerparameter gebildet sein.

Der Fahrzeugkolonnenmanager kann unter Berücksichtigung der Absichtserklärungen Fahrzeuge in einer Fahrzeugkolonne gruppieren und kinematische Zielvorgaben, Reisezielparameter bzw. Reisezielvorgaben, mindestens eine Fahrzeugkolonnenidentifikationsnummer und für jedes Fahrzeug der Fahrzeugkolonne eine Fahrzeugidentifikationsnummer bestimmen. Reisezielparameter können mit einem oder mehreren Reisezielen, einer oder mehrerer Reiserouten, den entlang der einen oder mehreren Reiserouten erlaubten Maximalgeschwindigkeiten und/oder Verkehrsinformationen gebildet werden.

Basierend auf den Positionsangaben und den Reisezielvorgaben bzw. der Fahrtrichtung kann der Fahrzeugkolonnenmanager die Fahrzeugidentifikationsnummern so bestimmen bzw. zuordnen, dass dem Fahrzeug, das den kleinsten Wegabstand zu einem Reiseziel aufweist, die Fahrzeugidentifikationsnummer 1 zugeordnet wird, wobei das Fahrzeug mit dem kleinsten Wegabstand zu einem Reiseziel das Führungsfahrzeug bilden kann. Fahrzeuge mit dem zweitkleinsten, drittkleinsten,... etc. Wegabstand zu einem Reiseziel können die Fahrzeugidentifikationsnummern 2, 3,... etc. zugeordnet werden, sodass die Fahrzeugkolonne eine Reihenanordnung von Fahrzeugen bildet, wobei der Reihenindex mit der Fahrzeugidentifikationsnummer gebildet ist.

Die fahrzeugspezifischen Steuerparameter können zumindest mit der Fahrzeugidentifikationsnummer, Modellparametern eines Reglers, und/oder Modellparametern eines Regelkreises gebildet sein. Die fahrzeugspezifischen Steuerparameter können auch mit Angaben zur Fahrzeugklasse, Angaben zum Bremsvermögen, Angaben zum Kraftstoffverbrauch, Angaben zum Kraftstoffvorrat, und/oder Angaben zu Motor- und weiteren Fahrzeugspezifikationen gebildet sein.

Die kinematischen Zielvorgaben können zumindest mit entlang einer Reiseroute vorgegebenen Zielwerten für die Geschwindigkeit des ersten und des zweiten Fahrzeugs des mindestens einen Fahrzeugpaars, den Wegabstand zwischen dem ersten und dem zweiten Fahrzeug des mindestens einen Fahrzeugpaars und/oder den Zeitabstand zwischen dem ersten und dem zweiten Fahrzeug des mindestens einen Fahrzeugpaars gebildet sein.

Die kinematischen Zustandsparameter können zumindest mit zeitabhängigen Messwerten für die Geschwindigkeit des ersten und/oder des zweiten Fahrzeugs des mindestens einen Fahrzeugpaars, den Wegabstand zwischen dem ersten und dem zweiten Fahrzeug des mindestens einen Fahrzeugpaars und/oder den Zeitabstand zwischen dem ersten und dem zweiten Fahrzeug des mindestens einen Fahrzeugpaars gebildet sein.

Vorzugsweise werden die Zielwerte entlang einer oder mehrerer Reiserouten unter Berücksichtigung von Verkehrsinformationen und Verkehrsregulierungsvorgaben bestimmt. Beispielsweise können Zielwerte für die Wegabstände unter Berücksichtigung der Fahrzeugklassen, Angaben zum Bremsvermögen oder zum gewünschten Kraftstoffverbrauch entlang der Reiseroute(n) bestimmt werden. Zielwerte für die Geschwindigkeiten können insbesondere unter Berücksichtigung der durch eine gesetzliche Verkehrsregulierung vorgegebenen oder auf aktuellen Verkehrsinformationen beruhenden erzielbaren Maximalgeschwindigkeiten bestimmt werden. Aus den Zielwerten für die Wegabstände und Geschwindigkeiten können dann die Zeitabstände bestimmt werden.

Der Fahrzeugkolonnenmanager kann dann mittels einer Formationserklärung kinematische Zielvorgaben, Reisezielvorgaben, die Fahrzeugkolonnenidentifikationsnummer, Fahrzeugidentifikationsnummern sowie Informationen, die in den Absichtserklärungen enthalten sind, wie beispielsweise fahrzeugspezifische Steuerparameter, an die mindesten zwei Fahrzeuge der Fahrzeugkolonne mittels Fahrzeug-zu-Fahrzeug-Kommunikation oder Fahrzeug-zu-Netzwerk-Kommunikation übermitteln.

Die Formation der Fahrzeugkolonne kann abgeschlossen werden, indem die mindestens zwei Fahrzeuge der Fahrzeugkolonne eine Zustimmungserklärung an den Fahrzeugkolonnenmanager senden. Vorzugsweise ist die Formation der Fahrzeugkolonne abgeschlossen, wenn der Fahrzeugkolonnenmanager von den mindestens zwei Fahrzeugen der Fahrzeugkolonne eine Zustimmungserklärung empfangen hat.

Während oder nach der Formation der Fahrzeugkolonne kann der Fahrzeugkolonnenmanager mindestens eine maximale Verzugszeit für die Fahrzeug-zu-Fahrzeug-Kommunikation so bestimmen, dass mindestens eine Bedingung für die Einhaltung der Kolonnenstabilität unter Berücksichtigung der kinematischen Zielvorgaben und fahrzeugspezifischen Steuerparameter erfüllt ist. Die mindestens eine Bedingung für die Kolonnenstabilität kann auf einem cooperative-adaptive-cruise-control-Modell (CACC) basieren. Insbesondere kann die mindestens eine Bedingung für die Kolonnenstabilität auf einem cooperative-adaptive-cruise-control-Modell (CACC) basieren.

Ein CACC-Modell kann zumindest näherungsweise die Funktionsweise eines CACC-Systems, mit dem die mindestens zwei Fahrzeuge der Fahrzeugkolonne ausgestattet sein können, mathematische beschreiben. Ein CACC-System kann zumindest mit einem Radar-System und/oder einem Lidar-System, einem Kommunikationssystem und einem Regler für die Steuerung der Brems- und Motorvorrichtung mittels Aktuatoren gebildet sein.

Ein CACC-Modell ist beispielsweise in Referenz [1] V. Naus et al., "String-Stable CACC Design and Experimental Validation: A Frequency Domain-Approach", IEEE Transactions on vehicular Technology, Nov 2010, pp. 4268-4279, beschrieben. Das CACC-Modell kann einen Regelkreis aufweisen, wobei ein Regelkreis mit einem Modellmodul für einen Regler, vorzugsweise einem PD-Regler (proportional-derivative controller) oder einem PID-Regler (proportional-integral-derivative Regler), einem Modellmodul für die Regeldynamik, vorzugsweise ein lineares Modellmodul für die Regeldynamik, einem Feedback-Filter, vorzugsweise einem Feedback-Filter zur Einhaltung eines vorgegebenen Zeitabstands zwischen dem ersten und dem zweiten Fahrzeug des mindestens einen Fahrzeugpaars, einem Modellmodul für einen Feedforward-Filter, einem Modellmodul für die Verzögerung der Fahrzeug-zu-Fahrzeug-Kommunikation und einem Modellmodul für die Signalrekonstruktion gebildet sein. Die Eingabegrößen eines Regelkreises zur Steuerung eines Fahrzeugs der Fahrzeugkolonne können mit Werten für mindestens einen kinematischen Kontrollparameter und mindestens einem kinematischen Zustandsparameter, gebildet sein. Der Regelkreis kann dann unter Berücksichtigung der Eingabegrößen und der kinematischen Zielvorgaben die Steuerung eines Fahrzeugs der Fahrzeugkolonne, vorzugsweise Aktuatoren der Bremsvorrichtungen und des Motors, beeinflussen bzw. regeln. Des Weiteren können auch absolute oder relative Positionsangaben und/oder Längenangaben eines oder mehrerer Fahrzeuge als Eingabegrößen berücksichtigt werden. Eine Regelung kann dabei mit dem Ziel erfolgen, Werte für den mindestens einen kinematischen Zustandsparameter an die kinematischen Zielvorgaben unter Gewährleistung der Fahrzeugkolonnenstabilität anzugleichen.

Ein Regelkreis eines ersten Fahrzeugs der Fahrzeugkolonne, insbesondere des Führungsfahrzeugs der Fahrzeugkolonne, kann auch ohne Eingabegrößen gebildet sein. Ein Regelkreis eines Fahrzeugs der Fahrzeugkolonne, das am Ende der Fahrzeugkolonne angeordnet ist, kann auch ohne Ausgabegrößen gebildet sein.

Kolonnenstabilität liegt insbesondere dann vor, wenn Störungen des kinematischen Zustands der Fahrzeuge der Fahrzeugkolonne, die beispielsweise durch ein Abbremsen oder Beschleunigen eines vorderen Fahrzeugs der Fahrzeugkolonne ausgelöst werden, nicht oder kaum entlang der Fahrzeugkolonne verstärkt werden. Die Kolonnenstabilitätsbedingung gewährleistet, dass dies der Fall ist. Dabei stellt die Erfüllung der Kolonnenstabilitätsbedingung insbesondere sicher, dass sich Werte eines kinematischen Kontrollparameters, der insbesondere eine kinematische Zustandsänderung beschreiben kann, entlang der Fahrzeugkolonne nicht vergrößern. Bei dem kinematischen Kontrollparameter kann es sich beispielsweise um die Fahrzeugbeschleunigung und bzw. oder ein Regelkreisfehlersignal handeln, so dass die Erfüllung der Kolonnenstabilitätsbedingungen sicherstellt, dass die Fahrzeuge in der Fahrzeugkolonne im Wesentlichen in demselben Maße (positiv) beschleunigt oder abgebremst werden. Bei der Fahrzeugbeschleunigung oder Beschleunigung (beide Begriffe werden im Folgenden synonym verwendet) kann es sich um die momentane Beschleunigung (Fahrzeugistbeschleunigung) oder die beabsichtigte Beschleunigung (Fahrzeugsollbeschleunigung) handeln.

Aus einem CACC-Modell kann mindestens eine Bedingung für die Kolonnenstabilität hergeleitet werden, indem die Propagation der Werte des mindestens einen kinematischen Kontrollparameters als Informationen bzw. Eingabegrößen von Regelkreisen entlang der Fahrzeugkolonne berechnet werden. Beispielsweise kann eine Kolonnenstabilitätsbedingung für das mindestens eine Fahrzeugpaar der Fahrzeugkolonne durch

$$\Lambda_i(s) = \left| \frac{D_i(s)F_i(s) + K_i(s)\,G_{i-1}(s)}{1 + K_i(s)G_i(s)H_i(s)} \right| \leq 1$$

gegeben sein, wobei $D_i(s) = T_i(s)Z_i(s)$. In der obigen Gleichung bezeichnet der Subindex i die Fahrzeugidentifikationsnummer des zweiten Fahrzeugs des mindestens einen Fahrzeugpaars. Der Subindex i bezeichnet dann das erste Fahrzeug des mindestens einen Fahrzeugpaars. Die Transferfunktion $\Lambda_i(s)$ ist mit einer bezüglich der Zeit Laplace-transformierten Modellfunktion für die Verzögerung der Fahrzeug-zu-Fahrzeug-Kommunikation $T_i(s) = e^{-\delta_i s}$, einer Modellfunktion für die Signalrekonstruktion $Z_i(s)$, wobei die Modellfunktion für die Signalrekonstruktion durch ein Abtasthalteglied mit der Übertragungsfunktion

$$Z_i(s) = (1 - e^{-\theta_i s})/(\theta_i\, s)$$

gegeben ist, einer Modellfunktion für einen PD-Regler $K_i(s) = k_{p,i} + k_{d,i}s$, einer Modellfunktion für die Regeldy-

namik $G_i(s) = k_{G,i}e^{-\phi_i s}/(s^2(\tau_i s + 1))$, einer Modellfunktion für einen Feedforward-Filter $F_i(s) = G_{i-1}(s)/(G_i(s)H_i(s))$, und einer Modellfunktion für einen Feedback-Filter $H_i(s) = 1 + h_i s$ gebildet. Wenn die Fahrzeuge in der Kolone identisch sind, d. h. $G_{i-1}(s) = G_i(s)$ vereinfacht sich die Funktion $F_i(s)$ zu

$$F_i(s) = 1/H_i(s)$$

und die Kolonnenstabilitätsbedingung zu

$$\Lambda_i(s) = \left| \frac{D_i(s)F_i(s) + K_i(s)\,G_i(s)}{1 + K_i(s)G_i(s)H_i(s)} \right| \leq 1$$

Der Parameter s bezeichnet die komplexe Frequenz der Laplace-transformierten Modellfunktionen. Der Parameter $\delta_i$ gibt die Übertragungszeit eines Datenpakets an und kann von der verwendeten Modulation, Codierung, der Größe eines Datenpakets und den verfügbaren Übertragungsressourcen abhängen. Desweiteren bezeichnen $k_{p,i}$, $k_{d,i}$ Modellparameter eines PD-Reglers und $\phi_i$, $\tau_i$, $k_{G,i}$ bezeichnen Modellparameter eines Regelkreises als fahrzeugspezifische Steuerparameter. Typische Werte für die oben eingeführten Modellparameter können in Ref. [1] und den darin zitierten Referenzen entnommen werden. Der Parameter $h_i$ gibt den vorgegebenen Zeitabstand zwischen dem ersten und dem zweiten Fahrzeug des mindestens einen Fahrzeugpaars (im Englischen als "headway time" bezeichnet) als kinematische Zielvorgabe an. Der Zeitabstand $h_i$ kann auch aus einem vorgegebenen Wegabstand $\Delta p_i^{soll}$ zwischen den Fahrzeugen des Fahrzeugpaars als kinematische Zielvorgabe und einer vorgegebenen Geschwindigkeit $v_i$ des zweiten Fahrzeugs als kinematische Zielvorgabe über die Definition $h_i = \Delta p_i^{soll}/v_i$ bestimmt werden.

Die Kolonnenstabilitätsbedingung hängt von der Verzugszeit $\Theta_i$ ab. Die Verzugszeit $\Theta_i$ bezeichnet dabei den konstanten zeitlichen Abstand mit dem Werte für den mindestens einen kinematischen Kontrollparameter als Informationen von dem ersten Fahrzeug des mindestens einen Fahrzeugpaars gesendet und von dem zweiten Fahrzeug des mindestens einen Fahrzeugpaars empfangen werden können. Die maximale Verzugszeit $\Theta_i^{max}$ wird typischerweise in Abhängigkeit der Kolonnenstabilitätsbedingung ermittelt. Beispielsweise kann die maximale Verzugszeit $\Theta_i^{max}$ aus der Bedingung $\Lambda_i = 1$ durch Auflösen der Gleichung $\Lambda_i = 1$ nach der Verzugszeit $\Theta_i$ bestimmt werden. Die maximale Verzugszeit $\Theta_i^{max}$ gibt dann an, mit welchem maximalen zeitlichen Abstand Werte für den mindestens einen kinematischen Kontrollparameter von dem ersten Fahrzeug des mindestens einen Fahrzeugpaars an das zweite Fahrzeug des mindestens einen Fahrzeugpaars gesendet werden können, ohne dass die oben angegebene Kolonnenstabilitätsbedingung verletzt ist.

Die maximale Verzugszeit $\Theta_i^{max}$ kann aus der Bedingung $\Lambda_i = 1$ numerisch oder semi-analytisch mit dem die folgenden Schritte umfassenden Algorithmus bestimmt werden:

- Die Laplace-transformierte Modellfunktion für die Verzögerung der Fahrzeug-zu-Fahrzeug-Kommunikation $D_i(s)$ wird mit einem Pade-Ansatz approximiert.

- Die Exponentialfunktion $e^{-\theta_i s}$ in der Laplace-transformierten Modellfunktion für die Signalrekonstruktion $Z_i(s)$ wird auch mit einem Pade-Ansatz approximiert, sodass die Auflösung der Gleichung $\Lambda_i = 1$ nach der Verzugszeit $\Theta_i$ sich aus der Bestimmung der Nullstellen eines Polynoms, das Vielfache von Potenzen der Verzugszeit $\Theta_i$ summiert, ergibt. Die Vielfachen der Potenzen der Verzugszeit $\Theta_i$ bilden dabei die Koeffizienten des Polynoms, die von fahrzeugspezifischen Steuerparametern, kinematischen Zustandsparametern und kinematischen Zielvorgaben sowie der komplexen Frequenz s abhängen können.

- Die Polstellen der Transferfunktion $\Lambda_i(s)$ werden berechnet. Die Koeffizienten des Polynoms werden dann für jede Polstelle, die für bzw. anstelle der komplexen Frequenz s eingesetzt wird, bestimmt. Für jede Polstelle und den damit bestimmten Koeffizienten des Polynoms werden die Nullstellen des Polynoms beispielsweise analytisch oder mittels eines Newton Verfahrens numerisch berechnet.

- Aus dem so bestimmten Satz reeller und positiver Nullstellen des Polynoms wird die kleinste Nullstelle als maximale Verzugszeit $\Theta_i^{max}$ bestimmt.

Die mindestens eine maximale Verzugszeit $\Theta_i^{max}$ für die Fahrzeug-zu-Fahrzeug-Kommunikation kann dann für jedes Fahrzeugpaar der Fahrzeugkolonne bzw. für jedes zweite Fahrzeug eines jeden Fahrzeugpaars mit der Fahrzeugidentifikationsnummer i bestimmt werden.

Die mindestens eine Datenübertragungssitzung kann durch Angabe eines Frequenzbands oder eines Subchannels, einer Anfangszeit oder eines initialen Subframes, und einer Periodendauer eindeutig spezifiziert werden. Insbesondere ist eine Datenübertragungssitzung mit mehreren zeitlich periodisch angeordneten Ressource-Blöcken gebildet, wobei der zeitliche Abstand zwischen zwei zeitlich unmittelbar nacheinander angeordneten, benachbarten Ressource-Blöcken jeweils durch die Periodendauer gegeben ist. Ein Ressource-Block bildet dabei die kleinste Zeit- und Frequenzeinheit, mit der Informationen mittels der Datenübertragungssitzung gesendet und empfangen werden können. Die Frequenzbreite eines Ressource-Blocks ist durch die Breite des Frequenzbands oder Subchannels gegeben. Beispielsweise beträgt die Frequenzbreite eines Ressource-Blocks im LTE-Standard 12 Subcarrier zu je 15 kHz. Die zeitliche Breite oder Zeitdauer eines Ressource-Blocks ist durch die zeitliche Länge eines Subframes gegeben. Beispielsweise beträgt die Zeitdauer eines Subframes im LTE-Standard 1 ms. Vorzugsweise ist die mindestens eine Datenübertragungssitzung eine semi-persistente Datenübertragungssitzung.

Die Periodendauer einer Datenübertragungssitzung kann dann für das mindestens eine Fahrzeugpaar der Fahrzeugkolonne wie folgt bestimmt werden:

- Zunächst kann die mindestens eine maximale Verzugszeit $\Theta_i^{max}$ für die Fahrzeug-zu-Fahrzeug-Kommunikation mit den von einem mobilen Netzwerkstandard erlaubten Werten für die Periodendauer der mindestens einen Datenübertragungssitzung verglichen werden. Beispielsweise sind im LTE-V2X-Standard unter anderem 20 ms, 50 ms, 100 ms, 200 ms,... etc. als erlaubte Werte für die Periodendauer festgelegt. Die kleinste Periodendauer beträgt im LTE-V2X Standard also 20 ms.

- Aus dem Satz erlaubter Werte für die Periodendauer der mindestens einen Datenübertragungssitzung werden zunächst diejenigen Werte bestimmt, die kleiner oder gleich sind als die mindestens eine maximale Verzugszeit $\Theta_i^{max}$ für die Fahrzeug-zu-Fahrzeug-Kommunikation und von denjenigen Werten, die kleiner oder gleich als die mindestens eine maximale Verzugszeit $\Theta_i^{max}$ für die Fahrzeug-zu-Fahrzeug-Kommunikation sind, wird derjenige Wert ausgewählt, der den kleinsten zeitlichen Abstand von der mindestens einen maximalen Verzugszeit $\Theta_i^{max}$ für die Fahrzeug-zu-Fahrzeug-Kommunikation aufweist.

- Der so eindeutig bestimmte Wert aus dem Satz erlaubter Werte kann dann einen Wert für die Periodendauer der mindestens einen Datenübertragungssitzung bilden.

- Falls die mindestens eine maximale Verzugszeit $\Theta_i^{max}$ für die Fahrzeug-zu-Fahrzeug-Kommunikation kleiner ist als die kleinste erlaubte Periodendauer der mindestens einen Datenübertragungssitzung, kann der Periodendauer der mindestens einen Datenübertragungssitzung auch genau dieser kleinste erlaubte Wert zugewiesen werden.

Vorteilhaft wirkt es sich aus, wenn die mindestens eine Datenübertragungssitzung mit mehreren zeitlich periodisch angeordneten Ressource-Blöcken gebildet ist, wobei der zeitliche Abstand zwischen zeitlich unmittelbar aufeinanderfolgenden Ressource-Blöcken durch eine Periode der mindestens einen Datenübertragungssitzung gegeben ist, die kleiner als die mindestens eine maximale Verzugszeit für die Fahrzeug-zu-Fahrzeug-Kommunikation ist.

Dem mindestens einen Fahrzeugpaar der Fahrzeugkolonne können auch mindestens zwei Datenübertragungssitzungen als Übertragungsressourcen für das Senden und/oder Empfangen von Informationen mittels der Fahrzeug-zu-Fahrzeug-Kommunikation zugewiesen werden, wobei die mindestens zwei Datenübertragungssitzungen dieselbe Periodendauer aber unterschiedliche Anfangszeiten oder initiale Subframes aufweisen können und der zeitliche Abstand zwischen den Anfangszeiten oder initialen Subframes kleiner als die Periodendauer der mindestens zwei Datenübertragungssitzungen ist. Besonders vorzugsweise überlappen die Ressource-Blöcke, die die mindestens zwei Datenübertragungssitzungen bilden, zeitlich nicht. Die mindestens zwei Datenübertragungssitzungen sind vorzugsweise mindestens zwei semi-persistente Datenübertragungssitzungen.

Besonders vorzugsweise können dem mindestens einen Fahrzeugpaar der Fahrzeugkolonne mehrere Datenübertragungssitzungen mit jeweils identischer Periodendauer als Übertragungsressourcen für das Senden und/oder Empfangen von Informationen mittels der Fahrzeug-zu-Fahrzeug-Kommunikation zugewiesen werden. Dabei kann der zeitliche Abstand der Anfangszeiten von zwei zeitlich benachbarten semi-persistenten Datenübertragungssitzungen durch

$$\frac{T_{SPS}}{N_{SPS}} \in \mathbb{N},$$

gegeben sein, wobei $T_{SPS}$ dimensionslos ist und die mittels der maximalen Verzugszeit $\Theta_i^{max}$ aus dem Satz erlaubter Werte bestimmte Periodendauer in Millisekunden und $N_{SPS}$ die Anzahl von Datenübertragungssitzungen bezeichnet. Dadurch ist es beispielsweise möglich, dass das erste Fahrzeug des mindestens einen Fahrzeugpaars Werte für den mindestens einen kinematischen Kontrollparameter als Informationen über die Fahrzeug-zu-Fahrzeug-Kommunikation mit einem zeitliche Abstand, der kleiner als der von einem mobilen Netzwerkstandard kleinste erlaubte Wert für eine Periodendauer einer Datenübertragungssitzung ist, an das zweite Fahrzeug des mindestens einen Fahrzeugpaars sendet. Vorzugsweise sendet das erste Fahrzeug des mindestens einen Fahrzeugpaars Werte für den mindestens einen kinematischen Kontrollparameter als Informationen mit einem zeitlichen Abstand, der kleiner als 20 ms ist, an das zweite Fahrzeug des mindestens einen Fahrzeugpaars.

Der Fahrzeugkolonnenmanager kann auch einen Scheduler eines mobilen Netzwerks, beispielsweise einen LTE-Scheduler, auffordern, Übertragungsressourcen für die Fahrzeug-zu-Fahrzeug-Kommunikation des mindestens einen Fahrzeugpaars zu bestimmen und dem ersten und zweiten Fahrzeug des mindestens einen Fahrzeugpaars zuzuweisen. Dafür können dem Scheduler die Fahrzeugidentifikationsnummer des ersten Fahrzeugs für das Senden von Informationen, die Fahrzeugidentifikationsnummer des zweiten Fahrzeugs für das Empfangen von Informationen und die Periodendauer der mindestens einen Datenübertragungssitzung übermittelt werden. Der Scheduler kann dann das Frequenzband bzw. den Subchannel und die Anfangszeit bzw. das initiale Subframe der mindestens einen Datenübertragungssitzung bestimmen.

Falls der Fahrzeugkolonnenmanager bestimmt hat, dass dem mindestens einen Fahrzeugpaar mindestens zwei Datenübertragungssitzungen zugewiesen werden sollen, kann der Fahrzeugkolonnenmanager dem Scheduler zusätzlich auch den zeitlichen Abstand der Anfangszeiten bzw. initialen Subframes der mindestens zwei Datenübertragungssitzungen übermitteln. Für diesen Fall kann der Scheduler die mindestens zwei Datenübertragungssitzungen auch wie eine einheitliche Datenübertragungssitzung behandeln und für die eine einheitliche Datenübertragungssitzung ein Frequenzband bzw. einen Subchannel und eine Anfangszeit bzw. ein initiales Subframe bestimmen.

Der Scheduler, ein mobiler Netzwerkstack oder der Fahrzeugkolonnenmanager kann dann die Übertragungsressourcen für die Fahrzeug-zu-Fahrzeug-Kommunikation dem mindestens einen Fahrzeugpaar der Fahrzeugkolonne zuweisen und/oder initiieren, indem er/es die Kommunikationseinheiten der Fahrzeuge des mindestens einen Fahrzeugpaars über die jeweiligen Frequenzbänder bzw. Subchannel, Anfangszeiten bzw. Subframes und Periodendauern der mindestens einen oder der mindestens zwei Datenübertragungssitzung(en) für das Senden und/oder Empfangen von Informationen informiert und/oder diese anweist mit dem Senden und/oder Empfangen von Informationen mittels der mindestens einen oder der mindestens zwei Datenübertragungssitzung(en) zu beginnen.

Die Übertragungsressourcen für die Fahrzeug-zu-Fahrzeug-Kommunikation können dabei eine half-duplex-Bedingung erfüllen. Insbesondere dann, wenn die Übertragungsressource Zeitressourcen umfassen, ist vorzugsweise vorgesehen, dass Ressource-Blöcke, die zwei unmittelbar aufeinanderfolgenden Fahrzeugen der Fahrzeugkolonne für das Senden und/oder Empfangen von Informationen zugewiesen werden, zeitlich nicht überlappen. Hierdurch kann gewährleistet werden, dass das erste Fahrzeug des mindestens einen Fahrzeugpaars nicht zur gleichen Zeit oder in dem gleichen Zeitraum wie das zweite Fahrzeug des mindestens einen Fahrzeugpaars Informationen senden kann.

Die Synchronisierung der Übertragungsressourcen für die Fahrzeug-zu-Fahrzeug-Kommunikation kann mittels Synchronisationssignalen, die über eine Basisstation eines mobilen Netzwerks an ein Netzwerkfahrzeug der Fahrzeugkolonne oder an die mindestens zwei Fahrzeuge der Fahrzeugkolonne gesendet werden, erreicht werden. Das Senden und Empfangen von Informationen über die zugewiesenen Übertragungsressourcen kann so lange durchgeführt werden bis eine erneute Zuweisung bzw. Initiierung von Übertragungsressourcen erfolgt.

Die kinematischen Zielvorgaben können aufgrund mindestens eines externen Ereignisses während der Reise neu bestimmt werden. Dabei können die Schritte (a) und (b) mit den neuen kinematischen Zielvorgaben, die die vor dem Zeitpunkt des Eintritts des mindestens einen externen Ereignisses bestimmten kinematischen Zielvorgaben ersetzen, erneut durchgeführt werden, sodass die mindestens eine maximale Verzugszeit und die dem ersten und dem zweiten Fahrzeug des mindestens einen Fahrzeugpaars jeweils zugewiesenen Übertragungsressourcen für die Fahrzeug-zu-Fahrzeug-Kommunikation dem tatsächlichen Reiseverlauf angepasst werden können.

Beispielsweise kann ein externes Ereignis in den folgenden Situationen eintreten bzw. an den Fahrzeugkolonnenmanager gemeldet werden:

- Ein Fahrzeug der Fahrzeugkolonne beabsichtigt die Fahrzeugkolonne zu verlassen und/oder ein neues Fahrzeug möchte sich der Fahrzeugkolonne anschließen.
- Die Zielwerte für den Wegabstand zwischen dem ersten Fahrzeug und dem zweiten Fahrzeug des mindestens einen Fahrzeugpaars werden, beispielsweise aufgrund von neuen Verkehrsinformationen oder Wetterinformationen, vom Fahrzeugkolonnenmanager geändert bzw. aktualisiert.
- Die Reiseroute wird, beispielsweise aufgrund aktualisierter Verkehrsinformationen, vom Fahrzeugkolonnenmanager geändert.
- Die Zielwerte für die Geschwindigkeiten der mindestens zwei Fahrzeuge der Fahrzeugkolonne werden geändert, beispielsweise wenn das Führungsfahrzeug eine Stadt, Schulzone, Fußgängerzone, Baustelle oder Straßenabschnitte mit reduzierter Maximalgeschwindigkeit erreicht. Beispielsweise können auch neue Maximalgeschwindigkeiten durch ein Navigationssystem oder on-board Sensoren erfasst werden und die Reisezielvorgaben entsprechend angepasst werden.

- Ein Fahrzeug der Fahrzeugkolonne meldet dem Fahrzeugkolonnenmanager, dass sich die fahrzeugspezifischen Steuerparameter, beispielsweise aufgrund einer Beeinträchtigung des jeweiligen Fahrzeugs nach einem Unfall oder einem Motorschaden, verändert haben.
- Ein externes Ereignis kann auch durch einen abrupten Bremsvorgang, der durch einen Fahrer des Fahrzeugs oder einen externen Operator initiiert wird, hervorgerufen werden.

Ein Fahrzeug der Fahrzeugkolonne oder ein externer Operator, der über ein mobiles Netzwerk mit dem Fahrzeugkolonnenmanager Informationen austauschen kann, kann den Fahrzeugkolonnenmanager über den Eintritt eines externen Ereignisses informieren und gegebenenfalls neue Reisezielparameter bestimmen und/oder die fahrzeugspezifischen Steuerparameter aktualisieren. Der Fahrzeugkolonnenmanager kann dann die kinematischen Zielvorgaben neu bestimmen und die Fahrzeuge der Fahrzeugkolonne über die Änderung der kinematischen Zielparameter informieren und/oder einzelne oder alle Schritte der Formation der Fahrzeugkolonne erneut durchführen.

Vorzugsweise ist jedes der mindestens zwei Fahrzeuge der Fahrzeugkolonne mit einem cooperative-adaptive-cruise-control-System (CACC), das eingerichtet ist, um eine Regelung der Steuerung des jeweiligen Fahrzeugs der Fahrzeugkolonne über einen Regelkreis durchzuführen, und/oder einem Satellitenortungssystem gebildet.

Das mindestens eine Kommunikationssystem, das eingerichtet ist, um mittels Fahrzeug-zu-Fahrzeug-Kommunikation Informationen zu senden und/oder zu empfangen kann auch eingerichtet sein, um mittels Fahrzeug-zu-Netzwerk-Kommunikation Informationen an eine Basisstation eines Mobilfunk-Netzwerkes zu senden oder von einer Basisstation eines MobilfunkNetzwerkes zu empfangen. Bei dem Mobilfunk-Netzwerk kann es sich beispielsweise um ein Mobilfunknetz handeln, das nach dem 4G- bzw. LTE-Standard oder nach dem 5G-Standard ausgestaltet ist. Gleichfalls kann das Mobilfunknetz jedoch auch in anderer Weise ausgestaltet sein.

Vorzugsweise sind die Kommunikationssysteme der mindestens zwei Fahrzeuge der Fahrzeugkolonne für die Fahrzeug-zu-Fahrzeug-Kommunikation so eingerichtet, dass Werte für den mindestens einen kinematischen Kontrollparameter als Informationen nur unidirektional entlang der Fahrzeugkolonne zwischen jeweils zwei aufeinanderfolgenden Fahrzeugen der Fahrzeugkolonne übertragen werden.

Besonders bevorzugt ist der mindestens eine kinematische Kontrollparameter zumindest mit der Beschleunigung des ersten Fahrzeugs des mindestens einen Fahrzeugpaars gebildet.

Die mindestens zwei Fahrzeuge der Fahrzeugkolonne können jeweils mit einer Mobilfunksendeeinheit und/oder einer Mobilfunkempfangseinheit gebildet sein. Die Mobilfunksendeinheit und die Mobilfunkempfangseinheit kann bzw. können beispielsweise nach dem 4G (LTE)-Standard oder dem 5G-Standard ausgestaltet sein. Sofern ein Mobilfunk-Netzwerk gemäß dem LTE-Standard eingesetzt wird, kann die Fahrzeug-zu-Fahrzeug-Kommunikation insbesondere über mindestens eine PC5-Schnittstelle einer LTE-Sendeeinheit und/oder einer LTE-Empfangseinheit erfolgen.

Die Erfindung stellt zudem ein System bereit, das einen Fahrzeugkolonnenmanager umfasst, der zur Durchführung des Verfahrens ausgebildet ist. Zudem kann das System eine Anordnung aus mindestens zwei Fahrzeugen, die eine Fahrzeugkolonne bilden, umfassen, die dazu ausgebildet ist, das beschriebene Verfahren durchzuführen.

Weiterhin stellt die Erfindung ein Computerprogrammprodukt bereit, das ein Computerprogramm (bzw. eine Befehlsfolge) aufweist, das Softwaremittel zum Durchführen des beschriebenen Verfahrens und bzw. oder zum Ansteuern der beschriebenen Anordnung aufweist, wenn das Computerprogramm in einer Recheneinheit abläuft. Vorzugsweise kann das Computerprogrammprodukt direkt in einen internen Speicher bzw. eine Speichereinheit der Recheneinheit geladen werden oder ist in diesem bereits gespeichert und umfasst typischerweise Teile eines Programmcodes zum Durchführen des beschriebenen Verfahrens oder zum Ansteuern der beschriebenen Anordnung, wenn das Computerprogrammprodukt auf der Recheneinheit abläuft bzw. ausgeführt wird. Das Computerprogrammprodukt kann auf einem maschinenlesbaren Träger, vorzugsweise einem digitalen Speichermedium gespeichert sein.

Ausführungsbeispiele der Erfindung sind in den Zeichnungen dargestellt und werden nachfolgend anhand der Figuren 1 bis 10 erläutert:

Es zeigen:

Fig. 1      eine schematische Darstellung der Fahrzeugkolonne des Fahrzeugkolonnenmanagers und einer Basistation des mobilen Netzwerks,

Fig. 2      eine schematische Darstellung von Zeit- und Frequenzressourcen für die Fahrzeug-zu-Fahrzeug-Kommunikation, die mit vier semi-persistenten Datenübertragungssätzen gebildet ist,

Fig. 3      eine schematische Darstellung von Regelkreisen eines CACC-Modells,

Fig. 4      eine schematische Darstellung von Schritten der Formation der Fahrzeugkolonne umfassend das Senden von Absichtserklärungen und bestimmen der Reisezielvorgaben,

Fig. 5    eine schematische Darstellung von Schritten der Formation der Fahrzeugkolonne umfassend das Senden von Formationserklärungen,

Fig. 6    eine schematische Darstellung von Schritten der Formation der Fahrzeugkolonne umfassend das Senden von Zustimmungserkärungen,

Fig. 7    eine schematische Darstellung von Schritten des erfindungsgemäßen Verfahrens umfassend die Bestimmung von mindestens einer maximalen Verzugszeit für die Fahrzeug-zu-Fahrzeug-Kommunikation,

Fig. 8    eine schematische Darstellung von Schritten des erfindungsgemäßen Verfahrens umfassend die Bestimmung und Zuweisung von Zeit- und Frequenzressourcen für die Fahrzeug-zu-Fahrzeug-Kommunikation,

Fig. 9    eine schematische Darstellung von Schritten des erfindungsgemäßen Verfahrens umfassend das Senden und Empfangen von Werten für mindestens einen kinematischen Kontrollparameter,

Fig. 10   eine schematische Darstellung eines Zeitablaufdiagramms umfassend die Schritte (1)-(4) des erfindungsgemäßen Verfahrens.

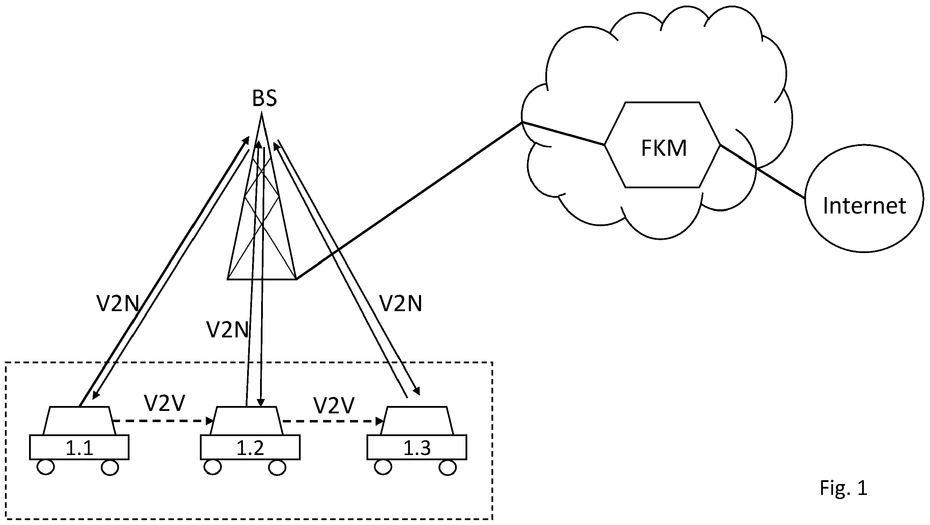

Figur 1 zeigt in einer schematischen Ansicht eine Fahrzeugkolonne mit drei Fahrzeugen 1.1, 1.2, 1.3. Die drei Fahrzeuge 1.1, 1.2, 1.3 (in dem in Figur 1 wiedergegebenen Ausführungsbeispiel Personenkraftwagen) sind jeweils mit einer Kommunikationseinheit ausgestattet, die eingerichtet ist, um mittels Fahrzeug-zu-Fahrzeug-Kommunikation V2V über Mobilfunk-Netzwerk und mittels Fahrzeug-zu-Netzwerk-Kommunikation V2N über eine Basisstation BS des Mobilfunknetzwerks Informationen zu senden und zu empfangen. Insbesondere sind die Kommunikationseinheiten in dem dargestellten Ausführungsbeispiel jeweils mit einer Mobilfunk-Sendeeinheit und einer MobilfunkEmpfangseinheit gebildet. Die Fahrzeuge 1.1, 1.2, 1.3 sind in dem in Figur 1 gezeigten Beispiel alle vom gleichen Fahrzeugtyp, in weiteren Ausführungsbeispielen können diese Fahrzeuge 1.1, 1.2, 1.3 aber auch Lastkraftwagen oder verfahrbare Roboter sein bzw. aus unterschiedlichen Typen von Fahrzeugen ausgewählt sein.

Bei dem Mobilfunk-Netzwerk kann es sich beispielsweise um ein Mobilfunknetz handeln, das nach dem 4G- bzw. LTE-Standard oder nach dem 5G-Standard ausgestaltet ist. Gleichfalls kann das Mobilfunknetz jedoch auch in anderer Weise ausgestaltet sein. Sofern ein Mobilfunk-Netzwerk gemäß dem LTE-Standard eingesetzt wird, kann die Fahrzeug-zu-Fahrzeug-Kommunikation insbesondere über mindestens eine PC5-Schnittstelle einer LTE-Sendeeinheit und/oder einer LTE-Empfangseinheit erfolgen.

Ein Fahrzeugkolonnenmanager FKM, der in Form einer Recheneinheit mit darauf ablaufendem Computerprogramm vorgesehen sein kann, ist über ein mobiles Netzwerk mit der Basisstation BS und dem Internet verbunden und bestimmt die kinematischen Zielvorgaben. Mit der aus den drei Fahrzeugen 1.1, 1.2, 1.3 gebildeten Fahrzeugkolonne können zwei Fahrzeugpaare gebildet werden. Ein erstes Fahrzeugpaar 1.1 und 1.2 ist mit einem ersten Fahrzeug 1.1 der Fahrzeugkolonne und einem in der Fahrzeugkolonne dem ersten Fahrzeug 1.1 unmittelbar nachfolgend angeordneten zweiten Fahrzeug 1.2 der Fahrzeugkolonne gebildet. Ein zweites Fahrzeugpaar 1.2 und 1.3 ist mit einem ersten Fahrzeug 1.2 der Fahrzeugkolonne und einem in der Fahrzeugkolonne dem ersten Fahrzeug 1.2 unmittelbar nachfolgend angeordneten zweiten Fahrzeug 1.3 der Fahrzeugkolonne gebildet.

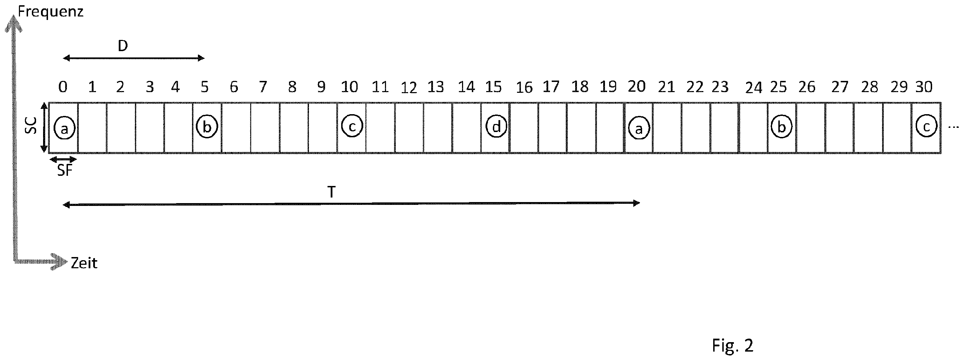

In Figur 2 sind beispielhaft Übertragungsressourcen für die Fahrzeug-zu-Fahrzeug-Kommunikation V2V, die dem ersten Fahrzeug 1.1 für das Senden von Werten für den mindestens einen kinematischen Zustandsparameter an das zweite Fahrzeug 1.2 und dem zweiten Fahrzeug 1.2 für das Empfangen dieser Werte zugewiesen sind, gezeigt. Wiederkehrende Merkmale sind in dieser Figur wie auch in den folgenden Figuren mit identischen Bezugszeichen versehen. Die für das erste Fahrzeugpaar 1.1 und 1.2 bestimmte maximale Verzugszeit, die die Einhaltung einer Kolonnenstabilitätsbedingung gewährleistet, beträgt 7 ms. Bei den in der Figur 2 gezeigten Übertragungsressourcen für die Fahrzeug-zu-Fahrzeug-Kommunikation handelt es sich um Zeit- und Frequenzressourcen in einem LTE-Mobilfunk-Netzwerk. Die Zeit- und Frequenzressourcen sind mit vier semi-persistenten Datenübertragungssitzungen a, b, c, d, die zeitlich versetzt beginnen, gebildet, wobei der zeitliche Abstand der Anfangszeiten von zwei zeitlich benachbarten semi-persistenten Datenübertragungssitzungen (z.B. a und(b, b und c, c und d) jeweils $D = 5$ ms beträgt. Die Periodendauer jeder der vier semi-persistenten Datenübertragungssitzungen beträgt $T = 20$ ms und entspricht dem minimalen Wert für die Periodendauer einer semi-persistenten Datenübertragungssitzung im LTE-Standard. In Figur 2 sind insgesamt 30 Ressource-Blöcke gezeigt, wobei die zeitliche Breite eines Ressource-Blocks der Zeitdauer eines Subframes SF im LTE-Standard entspricht und die Frequenzbreite eines Ressource-Blocks der Frequenzbreite eines Subchannels SC im LTE-Standard entspricht. Die Begrenzung auf 30 Ressource-Blöcke soll keine limitierte Zeitdauer der semi-persistenten Datenübertragungssitzungen zeigen, sondern dient lediglich einer kompakten schematischen Darstellungsweise. Dabei bilden die Ressource-Blöcke 0 und 20 zumindest einen Teil der semi-persistenten Datenübertragungssitzung a, wobei der Ressource-Block 0 in dem initialen Subframe SF der semi-persistenten Datenübertragungssitzung a angeordnet ist. Die Ressource-Blöcke 5 und 25 bilden zumindest einen Teil der semipersistenten Datenübertragungssitzung b, wobei der Ressource-Block 5 in dem initialen Subframe der semipersistenten Datenübertragungssitzung b angeordnet ist etc..

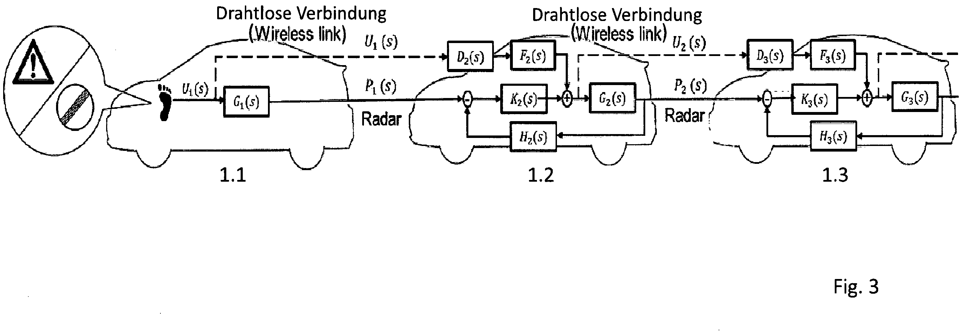

Figur 3 zeigt ein CACC-Modell für die drei Fahrzeuge 1.1, 1.2, 1.3 der Fahrzeugkolonne. Jedes Fahrzeug 1.1, 1.2, 1.3) der Fahrzeugkolonne ist dabei mit einem Regelkreis für die Steuerung des jeweiligen Fahrzeugs gebildet. Der Regelkreis des ersten Fahrzeugs 1.1 der Fahrzeugkolonne, das gleichzeitig das Führungsfahrzeug 1.1 der Fahrzeugkolonne bildet, ist lediglich mit einer Modellfunktion für die Regeldynamik $G_1(s)$ beschrieben. Der Regelkreis des zweiten Fahrzeugs 1.2 der Fahrzeugkolonne ist durch $D_2(s) = T_2(s)Z_2(s)$, wobei $T_2(s)$ eine Modellfunktion für die Verzögerung der Fahrzeug-zu-Fahrzeug-Kommunikation und $Z_2(s)$ eine Modellfunktion für die Signalrekonstruktion in Form eines Abtasthalteglieds ist, einer Modellfunktion für einen PD-Regler $K_2(s)$, einer Modellfunktion für die Regeldynamik $G_2(s)$, einer Modellfunktion für einen Feedforward Filter $F_2(s)$, und einer Modellfunktion für einen Feedback-Filter $H_2(s)$ beschrieben. Eingabegrößen des Regelkreises des zweiten Fahrzeugs 1.2 sind mit Werten $U_1(s)$ für die momentane Beschleunigung des ersten Fahrzeugs 1.1 der Fahrzeugkolonne als mindestens ein kinematischer Kontrollparameter (in der Laplace-Domäne), der über die Fahrzeug-zu-Fahrzeug-Kommunikation V2V, Wireless Link mit einem zeitlichen Abstand von D = 5 ms an das zweite Fahrzeug 1.2 gesendet wird, und mit Werten $P_1(s)$ für den momentanen Wegabstand zwischen dem ersten 1.1 und dem zweiten 1.2 Fahrzeug, die Position des ersten 1.1 und/oder des zweiten 1.2 Fahrzeugs, und/oder den momentanen Geschwindigkeiten des ersten 1.1 und/oder des zweiten 1.2 Fahrzeugs als kinematische Zustandsparameter (in der Laplace-Domäne), die zumindest mittels eines Radar-Systems, das sich auf bzw. in dem zweiten Fahrzeug 1.2 als mindestens eine Messvorrichtung in Form von Radar oder Lidar befindet, und/oder eines Satellitenortungssystems erfasst werden können, gebildet. Weitere Eingabegrößen für den in Fig. 3 gezeigten Regelkreis bilden die Längenangaben der jeweiligen Fahrzeuge (nicht gezeigt).

Mit den Werten $P_1(s)$ für den momentanen Wegabstand zwischen dem ersten 1.1 und dem zweiten 1.2 Fahrzeug, die Position des ersten 1.1 und/oder des zweiten 1.2 Fahrzeugs, und/oder den momentanen Geschwindigkeiten des ersten 1.1 und/oder des zweiten 1.2 Fahrzeugs als kinematische Zustandsparameter wird dann der momentane Zeitabstand zwischen dem ersten 1.1 und dem zweiten 1.2 Fahrzeug als kinematischer Zustandsparameter, beispielsweise von der mindestens einen Messvorrichtung selbst oder einem damit verbundenen Prozessor oder weiteren Rechenmittel, bestimmt. Der Regelkreis des zweiten 1.2 Fahrzeugs regelt dann die Dynamik bzw. Steuerung des zweiten 1.2 Fahrzeugs mit dem Ziel, die mittels des Radar-Systems erfassten bzw. bestimmten Zeitabstände als kinematischer Zustandsparameter den kinematischen Zielvorgaben, die vom Fahrzeugkolonnenmanager FKM mittels einer Formationserklärung zuvor an das zweite Fahrzeug 1.2 übermittelt wurden, anzugleichen. Dieses Prozedere wiederholt sich analog im dritten Fahrzeug 1.3 der Fahrzeugkolonne, wobei das dritte Fahrzeug 1.3 am Ende der Fahrzeugkolonne angeordnet ist und deshalb keine Werte für die momentane Beschleunigung des dritten Fahrzeugs 1.3 an ein weiteres Fahrzeug der Fahrzeugkolonne sendet. Der jeweilige Regelkreis ist in dem in Figur 3 gezeigten Ausführungsbeispiel als Computerprogramm in einer Steuerungs-/Regelungseinheit des jeweiligen Fahrzeugs 1.1, 1.2, 1.3 implementiert. Das in Fig. 3 gezeigte Modell eines Regelkreises beschreibt näherungsweise die Implementierung eines CACC-Systems in den jeweiligen Fahrzeugen bzw. der Fahrzeugkolonne.

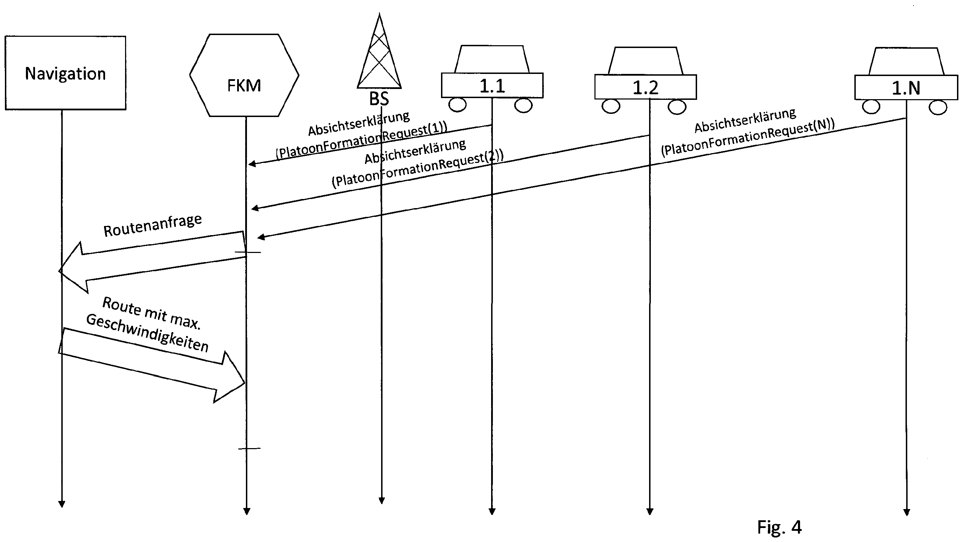

In Figur 4 ist in einer schematischen Darstellung ein Teilschritt der Formation der Fahrzeugkolonne gezeigt, bei dem die Fahrzeuge 1.1, 1.2, 1.N der Fahrzeugkolonne, wobei N=3 die Anzahl der Fahrzeuge der Fahrzeugkolonne angibt, jeweils eine Absichtserklärung (PlatoonFormationRequest()) an den Fahrzeugkolonnenmanager FKM mittels LTE PUSCH senden. Die Absichtserklärung ist zumindest mit Positionsangaben, Zielkoordinaten als fahrzeugspezifische Reisezielangaben und fahrzeugspezifischen Steuerparametern gebildet. Der Fahrzeugkolonnenmanager FKM bestimmt daraufhin eine Reiseroute und sendet eine Routenanfrage über das Internet an ein Navigationssystem, das mit "Navigation" in Figur 4 gekennzeichnet ist. Das Navigationssystem (Navigation) sendet daraufhin Verkehrsinformationen, insbesondere Verkehrsregulierungsinformationen, die mit den entlang der Reiseroute vorgeschriebenen Maximalgeschwindigkeiten gebildet sind, über das Internet an den Fahrzeugkolonnenmanager FKM. Der Fahrzeugkolonnenmanager FKM bestimmt die kinematischen Zielvorgaben unter Berücksichtigung von Reisezielparametern und fahrzeugspezifischen Steuerparametern.

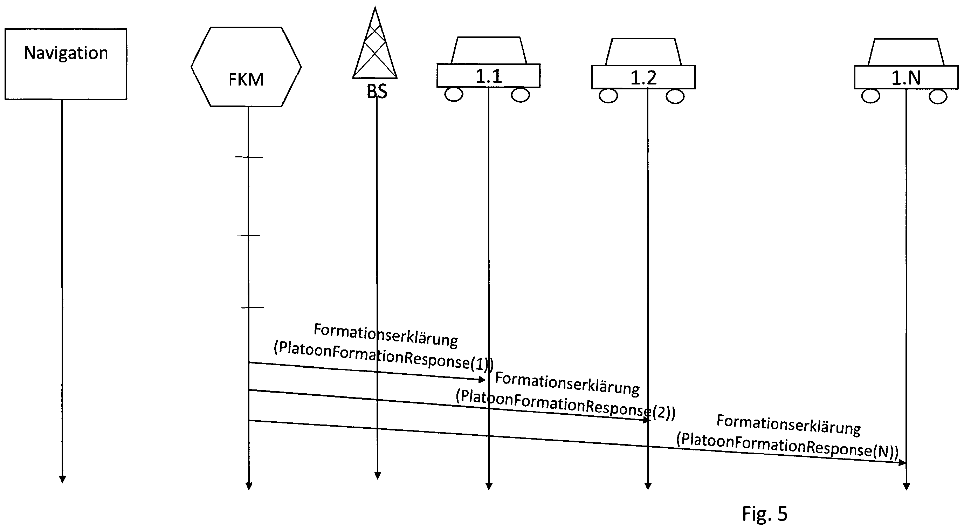

Figur 5 zeigt in einer Figur 4 entsprechenden Ansicht einen Teilschritt der Formation der Fahrzeugkolonne, bei dem der Fahrzeugkolonnenmanager FKM eine Formationserklärung PlatoonFormationResponse() an jedes Fahrzeug 1.1, 1.2, 1.N) der Fahrzeugkolonne mittels LTE PDSCH sendet. Die Formationserklärung an ein Fahrzeug 1.1, 1.2, 1.N der Fahrzeugkolonne ist zumindest mit der Fahrzeugkolonnenidentifikationsnummer, der Fahrzeugidentifikationsnummer, kinematischen Zielvorgaben, Reisezielparametern sowie fahrzeugspezifischen Steuerparametern desjenigen weiteren Fahrzeugs, das in der Reihenanordnung der Fahrzeugkolonne unmittelbar vor dem Fahrzeug angeordnet ist, gebildet. Insbesondere kann mit diesen Werten bzw. Parametern der Feedforward-Filter berechnet werden, falls dies in dem Regelkreis bzw. CACC-System des Fahrzeugs vorgesehen ist.

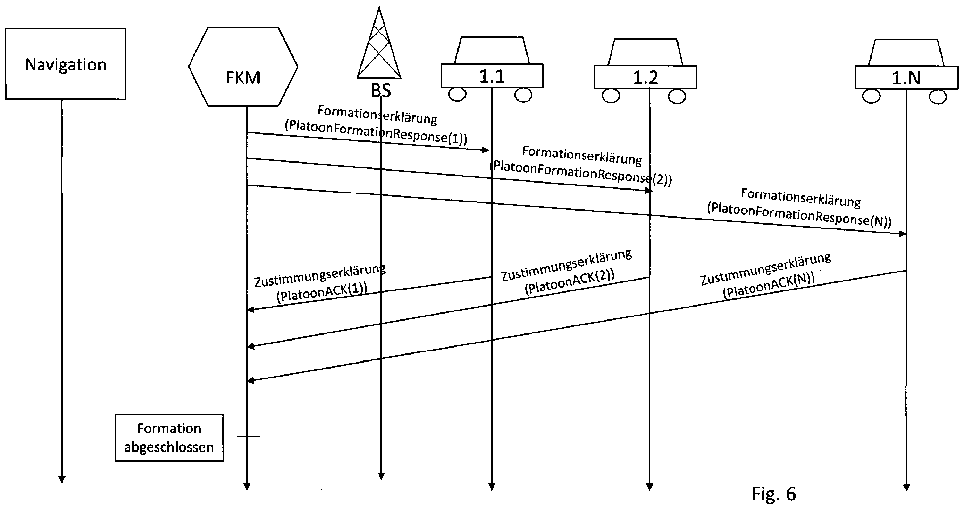

Figur 6 zeigt in einer Figur 4 entsprechenden Ansicht einen Teilschritt der Formation der Fahrzeugkolonne, bei dem jedes Fahrzeug 1.1, 1.2, 1.N der Fahrzeugkolonne dem Fahrzeugkolonnenmanager FKM eine Zustimmungserklärung PlatoonACK() sendet. Die Zustimmungserklärung ist zumindest mit der Fahrzeugkolonnenidentifikationsnummer, der Fahrzeugidentifikationsnummer und einem Zustimmungs- (AcK=1) oder Ablehnungswert (AcK=0) gebildet. Sobald alle Fahrzeuge 1.1, 1.2, 1.N der Fahrzeugkolonne einen Zustimmungswert gesendet haben, ist die Formation der Fahrzeugkolonne abgeschlossen.

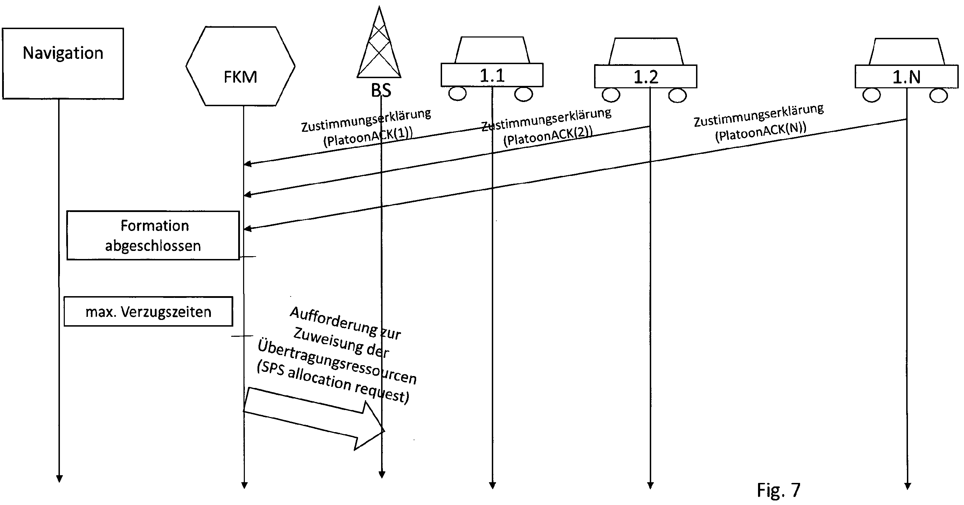

In Figur 7 ist in einer Figur 4 entsprechenden Ansicht die Bestimmung von mindestens einer maximalen Verzugszeit für die Fahrzeug-zu-Fahrzeug-Kommunikation für jedes Fahrzeugpaar 1.1 und 1.2 sowie 1.2 und 1.N der Fahrzeugkolonne durch den Fahrzeugkolonnenmanager FKM gezeigt, wobei die mindestens eine maximale Verzugszeit so bestimmt wird, dass eine Kolonnenstabilitätsbedingung unter Berücksichtigung der kinematischen Zielvorgaben und fahrzeugspezifischen Steuerparameter erfüllt ist. Basierend auf der mindestens einen maximalen Verzugszeit bestimmt der Fahrzeugkolonnenmanager FKM die Anzahl und Periodendauer der semi-persistenten Datenübertragungssitzungen für jedes Fahrzeugpaar 1.1 und 1.2 sowie 1.2 und 1.N der Fahrzeugkolonne für das Senden und Empfangen von Informationen.

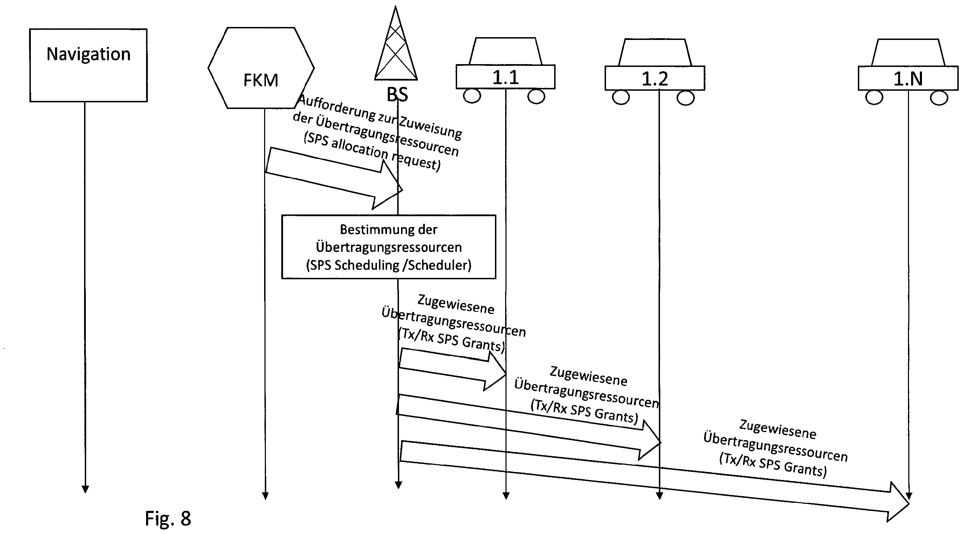

Figur 8 zeigt in einer Figur 4 entsprechenden Ansicht die Bestimmung und Zuweisung von Übertragungsressourcen für die Fahrzeug-zu-Fahrzeug-Kommunikation, wobei der Fahrzeugkolonnenmanager FKM den Scheduler eines Mobilfunk-Netzwerks, wie etwa eines 4G- oder 5G-Mobilfunknetzes, über die Basisstation BS auffordert (SPS allocation request), die Übertragungsressourcen für die Fahrzeug-zu-Fahrzeug-Kommunikation zuzuweisen. Der Scheduler bestimmt daraufhin für jede einheitliche semi-persistente Datenübertragungssitzung die jeweiligen spezifischen Übertragungsressourcen für jedes Fahrzeug 1.1, 1.2, 1.N der Fahrzeugkolonne vorzugsweise unter Berücksichtigung einer half-duplex Bedingung zur Vermeidung von Interferenzen. Die so bestimmten Übertragungsressourcen für die Fahrzeug-zu-Fahrzeug-Kommunikation werden dann den Fahrzeugen 1.1, 1.2, 1.N der Fahrzeugkolonne vom Scheduler gesendet (Tx/Rx SPS Grants). Damit sind die Übertragungsressourcen für die Fahrzeug-zu-Fahrzeug-Kommunikation jedem Fahrzeug 1.1, 1.2, 1.N der Fahrzeugkolonne auch zugewiesen.

In dem zuvor erläuterten Fall einer Fahrzeug-zu-Fahrzeug-Kommunikation über ein LTE-Mobilfunk-Netzwerk werden dem Scheduler vom Fahrzeugkolonnenmanager FKM zumindest die Anzahl und Periodendauern der semi-persistenten Datenübertragungssitzungen für das Senden (Tx) und/oder Empfangen (Rx) von Informationen, die zeitlichen Abstände D= 5 ms zwischen den Anfangszeiten bzw. initialen Subframes der semi-persistenten Datenübertragungssitzungen a und b, b und c, c und d (siehe Fig. 2) sowie die korrespondierenden Fahrzeugidentifikationsnummern und Fahrzeugkolonnenidentifikationsnummer gesendet. Der Scheduler bestimmt daraufhin für jede einheitliche semi-persistente Datenübertragungssitzung, die mit vier semi-persistenten Datenübertragungssitzungen gebildet ist, die jeweiligen Anfangszeiten bzw. initialen Subframes sowie die Frequenzbänder bzw. Subchannel für jedes Fahrzeug 1.1, 1.2, 1.N der Fahrzeugkolonne unter Berücksichtigung einer half-duplex Bedingung. Die so bestimmten Informationen für die Zeit- und Frequenzressourcen für die Fahrzeug-zu-Fahrzeug-Kommunikation werden dann den Fahrzeugen 1.1, 1.2, 1.N der Fahrzeugkolonne vom Scheduler gesendet (Tx/Rx SPS Grants).

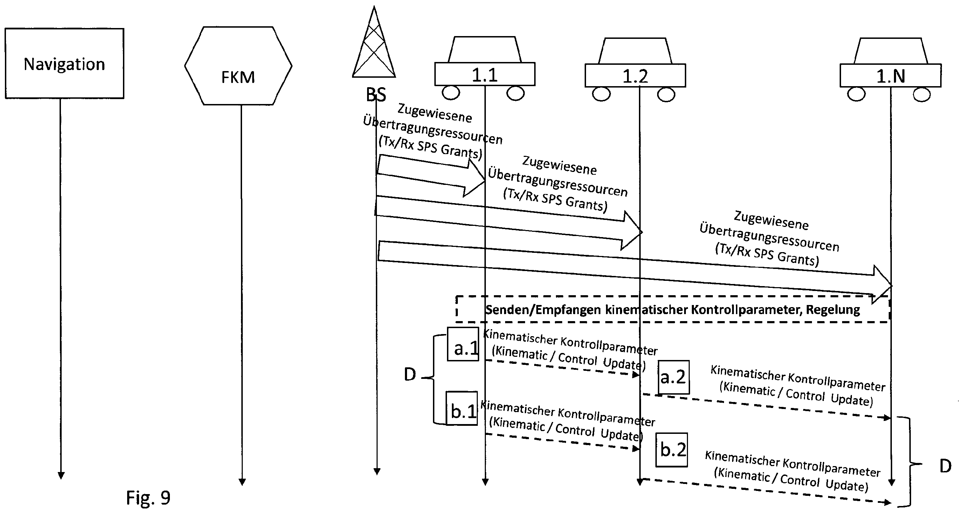

Figur 9 stellt in einer Figur 4 entsprechenden Ansicht dar, wie mittels der zugewiesenen Zeit-und Frequenzressourcen für die Fahrzeug-zu-Fahrzeug-Kommunikation Werte für mindestens einen kinematischen Kontrollparameter als Informationen mit einem zeitlichen Abstand D = 5 ms, der kleiner als die mindestens eine maximale Verzugszeit von 7 ms und auch kleiner als die Periodendauern der vier semi-persistenten Datenübertragungssitzungen a, b, c,d T=20 ms (siehe Fig. 2) ist, von einem ersten Fahrzeug 1.1, 1.2 eines Fahrzeugpaars gesendet (Kinematic/Control Update) und von einem zweiten Fahrzeug 1.2, 1.N eines Fahrzeugpaars empfangen werden. Dafür werden in dem in Figur 9 dargestellten Ausführungsbeispiel die Ressource-Blöcke a.1, b.1 der semi-persistenten Datenübertragungssitzungen a, b von dem ersten Fahrzeug 1.1 des ersten Fahrzeugpaars 1.1, 1.2 für das Senden an das zweite Fahrzeug 1.2 des ersten Fahrzeugpaars 1.1, 1.2 genutzt und die Ressource-Blöcke a.2, b.2 der semi-persistenten Datenübertragungssitzungen a, b von dem ersten Fahrzeug 1.2 des zweiten Fahrzeugpaars 1.2 und 1.N für das Senden an das zweite 1.N Fahrzeug des zweiten Fahrzeugpaars 1.2 und 1.N genutzt. Unter Berücksichtigung dieser gesendeten und empfangenen Werte für den mindestens einen kinematischen Kontrollparameter können dann die jeweils zweiten Fahrzeuge 1.2, 1.N des jeweiligen Fahrzeugpaars eine Regelung der Steuerung über einen Regelkreis bzw. ein CACC-System wie in Figur 3 beschrieben durchführen.

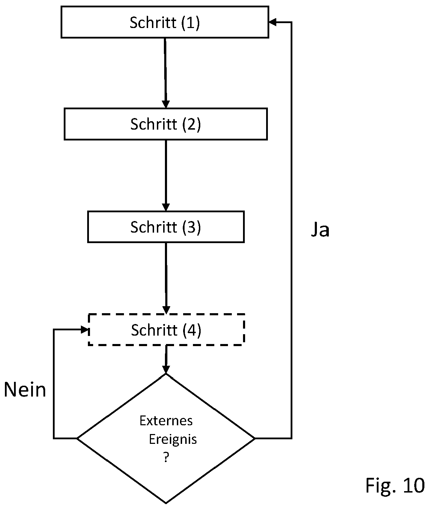

Fig. 10 zeigt ein Zeitablaufdiagramm umfassend Schritte (1)-(4) eines Verfahrens zur Kontrolle der Fahrzeugkolonne mit den mindestens zwei Fahrzeugen 1.1, 1.2, wobei die mindestens zwei Fahrzeuge 1.1, 1.2 der Fahrzeugkolonne jeweils mit einem Kommunikationssystem, das eingerichtet ist, um mittels Fahrzeug-zu-Fahrzeug-Kommunikation Informationen zu senden und/oder zu empfangen, und einer Messvorrichtung, die eingerichtet ist, um Werte für mindestens einen kinematischen Zustandsparameter zu erfassen, gebildet sind. Bei dem Verfahren werden für mindestens ein Fahrzeugpaar 1.1, 1.2 der Fahrzeugkolonne, das mit einem ersten Fahrzeug 1.1 der Fahrzeugkolonne und einem in der Fahrzeugkolonne dem ersten Fahrzeug 1.1 unmittelbar nachfolgend angeordneten zweiten Fahrzeug 1.2 der Fahrzeugkolonne gebildet ist,

(1) kinematische Zielvorgaben unter Berücksichtigung von Reisezielparametern und fahrzeugspezifischen Steuerparametern bestimmt,

(2) mindestens eine maximale Verzugszeit für die Fahrzeug-zu-Fahrzeug-Kommunikation so bestimmt, dass mindestens eine Bedingung für die Einhaltung der Kolonnenstabilität unter Berücksichtigung der kinematischen Zielvorgaben und fahrzeugspezifischen Steuerparameter erfüllt ist,

(3) Zeit- und Frequenzressourcen für die Fahrzeug-zu-Fahrzeug-Kommunikation dem ersten 1.1 und dem zweiten 1.2 Fahrzeug zugewiesen, wobei die zugewiesenen Zeit- und Frequenzressourcen mit mindestens einer semi-persistenten Datenübertragungssitzung unter Berücksichtigung der mindestens einen maximalen Verzugszeit gebildet sind,

(4) mittels der zugewiesenen Zeit- und Frequenzressourcen für die Fahrzeug-zu-Fahrzeug-Kommunikation Werte für mindestens einen kinematischen Kontrollparameter als Informationen mit einem zeitlichen Abstand, der kleiner als die in Schritt (2) bestimmte mindestens eine maximale Verzugszeit ist, von dem ersten Fahrzeug 1.1 des mindestens einen Fahrzeugpaars gesendet und von dem zweiten Fahrzeug 1.2 des mindestens einen Fahrzeugpaars empfangen und unter Berücksichtigung der empfangenen Werte für den mindestens einen kinematischen Kontrollparameter eine Regelung der Steuerung des zweiten Fahrzeugs 1.2 des mindestens einen Fahrzeugpaars über einen Regelkreis mit dem Ziel, die mittels der mindestens einen Messvorrichtung des zweiten Fahrzeugs 1.2 des mindestens einen Fahrzeugpaars gemessenen Werte für mindestens einen kinematischen Zustandsparameter an die in Schritt (1) bestimmten kinematischen Zielvorgaben unter Gewährleistung der Kolonnenstabilität anzugleichen durchgeführt wird.

Im Fall des Eintretens eines externen Ereignisses (Ja) werden die Schritte (1) bis (4) erneut durchgeführt. Dadurch können die Zeit- und Frequenzressourcen für die Fahrzeug-zu-Fahrzeug-Kommunikation und insbesondere die maximalen Verzugszeiten und daraus resultierenden Periodendauern und zeitlichen Abstände, mit denen Werte für mindestens einen kinematischen Kontrollparameter von einem ersten an ein zweites Fahrzeug eines Fahrzeugpaars gesendet werden dem tatsächlichen Reiseverlauf der Fahrzeuge 1.1, 1.2, 1.N der Fahrzeugkolonne flexibel und effizient angepasst werden.

**Patentansprüche**

1. Verfahren zur Kontrolle einer Fahrzeugkolonne mit mindestens zwei Fahrzeugen (1.1, 1.2), die mindestens ein Fahrzeugpaar bilden, wobei das mindestens eine Fahrzeugpaar ein erstes Fahrzeug (1.1) und ein zweites Fahrzeug (1.2) umfasst und das erste Fahrzeug (1.1) dem zweiten Fahrzeug (1.2) in der Fahrzeugkolonne unmittelbar vorausgehend angeordnet ist,

wobei die mindestens zwei Fahrzeuge (1.1, 1.2) der Fahrzeugkolonne jeweils mit einem Kommunikationssystem, das eingerichtet ist, um mittels Fahrzeug-zu-Fahrzeug-Kommunikation Informationen zu senden und/oder zu empfangen, und einer Messvorrichtung, die eingerichtet ist, um Werte für mindestens einen kinematischen Zustandsparameter zu erfassen, gebildet sind, und das zweite Fahrzeug (1.2) eine Regelung der Steuerung des zweiten Fahrzeugs (1.2) unter Berücksichtigung durch das erste Fahrzeug (1.1) versendeter und von dem zweiten Fahrzeug (1.1) empfangener Werte für mindestens einen kinematischen Kontrollparameter mit dem Ziel durchführt, die mittels der mindestens einen Messvorrichtung des zweiten Fahrzeugs (1.2) des mindestens einen Fahrzeugpaars gemessenen Werte für mindestens einen kinematischen Zustandsparameter an kinematischen Zielvorgaben anzugleichen,
und bei dem Verfahren

(a) mindestens eine maximale Verzugszeit für die Fahrzeug-zu-Fahrzeug-Kommunikation so bestimmt wird, dass mindestens eine auf einem cooperative-adaptive-cruise-control (CACC) Modell basierende Bedingung für die Einhaltung der Kolonnenstabilität unter Berücksichtigung von kinematischen Zielvorgaben und fahrzeugspezifischen Steuerparametern erfüllt ist, wobei die Verzugszeit einem zeitlichen Abstand entspricht, mit dem Informationen von Fahrzeug zu Fahrzeug gesendet werden können, und

(b) die Übertragungsressourcen für die Fahrzeug-zu-Fahrzeug-Kommunikation zwischen dem ersten Fahrzeug (1.1) und dem zweiten (1.2) Fahrzeug bestimmt werden, wobei die Übertragungsressourcen mit mindestens einer Datenübertragungssitzung unter Berücksichtigung der mindestens einen maximalen Verzugszeit gebildet sind,

(c) und mittels der Übertragungsressourcen für die Fahrzeug-zu-Fahrzeug-Kommunikation die Werte für den mindestens einen kinematischen Kontrollparameter als Informationen mit einem zeitlichen Abstand, der kleiner als die mindestens eine maximale Verzugszeit ist, von dem ersten Fahrzeug (1.1) des mindestens einen Fahrzeugpaars gesendet werden und von dem zweiten Fahrzeug (1.2) des mindestens einen Fahrzeugpaars empfangen werden können.

2. Verfahren nach Anspruch 1, **dadurch gekennzeichnet, dass** zumindest das erste Fahrzeug (1.1) des mindestens einen Fahrzeugpaars eine Information über die für die Fahrzeug-zu-Fahrzeug-Kommunikation bestimmten Übertragungsressourcen empfängt und nach Maßgabe dieser Informationen die Werte für den mindestens einen kinematischen Kontrollparameter von dem ersten Fahrzeug (1.1) gesendet werden und von dem zweiten Fahrzeug (1.2) empfangen werden können.

3. Verfahren nach Anspruch 1 oder 2, **dadurch gekennzeichnet, dass** die kinematischen Zielvorgaben unter Berücksichtigung von Reisezielparametern und/oder fahrzeugspezifischen Steuerparametern bestimmt werden, die zumindest teilweise von Fahrzeugen der Fahrzeugkolonne bereitgestellt werden.

4. Verfahren nach einem der vorhergehenden Ansprüche, **dadurch gekennzeichnet, dass** während der Formation der Fahrzeugkolonne jedem Fahrzeug (1.1, 1.2) der Fahrzeugkolonne eine Fahrzeugidentifikationsnummer zugeordnet wird und Reisezielvorgaben bestimmt werden, wobei die Formation der Fahrzeugkolonne umfassende Schritte zeitlich vor der Bestimmung der kinematischen Zielvorgaben und/oder erneut nach Eintritt eines externen Ereignisses beginnen.

5. Verfahren nach einem der vorhergehenden Ansprüche, **dadurch gekennzeichnet, dass** die Reisezielparameter zumindest mit einem oder mehreren Reisezielen, einer oder mehreren Reiserouten, den entlang der einen oder mehreren Reiserouten erlaubten Maximalgeschwindigkeiten und/oder Verkehrsinformationen gebildet sind.

6. Verfahren nach einem der vorhergehenden Ansprüche, **dadurch gekennzeichnet, dass** die kinematischen Zielvorgaben zumindest mit entlang einer Reiseroute vorgegebenen Zielwerten für die Geschwindigkeiten der Fahrzeuge (1.1, 1.2) des mindestens einen Fahrzeugpaars (1.1, 1.2), dem Wegabstand zwischen dem ersten Fahrzeug (1.1) und dem zweiten Fahrzeug (1.2) des mindestens einen Fahrzeugpaars (1.1, 1.2) und/oder dem Zeitabstand zwischen dem ersten Fahrzeug (1.1) und dem zweiten Fahrzeug (1.2) des mindestens einen Fahrzeugpaars (1.1, 1.2) gebildet sind
und/oder
die kinematischen Zustandsparameter zumindest mit zeitabhängigen Messwerten für die Geschwindigkeit des ersten Fahrzeugs (1.1) und/oder des zweiten Fahrzeugs (1.2) des mindestens einen Fahrzeugpaars (1.1, 1.2), dem Wegabstand zwischen dem ersten Fahrzeug (1.1) und dem zweiten Fahrzeug (1.2) des mindestens einen Fahrzeugpaars (1.1, 1.2) und/oder dem Zeitabstand zwischen dem ersten Fahrzeug (1.1) und dem zweiten Fahrzeug (1.2) des mindestens einen Fahrzeugpaars (1.1, 1.2) gebildet sind.

7. Verfahren nach einem der vorhergehenden Ansprüche, **dadurch gekennzeichnet, dass** die fahrzeugspezifischen Steuerparameter zumindest mit Fahrzeugidentifikationsnummern, Modellparameter eines Reglers und/oder Modellparametern eines Regelkreises gebildet sind.

8. Verfahren nach einem der vorhergehenden Ansprüche, **dadurch gekennzeichnet, dass** die mindestens eine Datenübertragungssitzung mit mehreren zeitlich periodisch angeordneten Ressource-Blöcken gebildet ist, wobei der zeitliche Abstand zwischen zeitlich unmittelbar nacheinander angeordneten, benachbarten Ressource-Blöcken durch eine Periodendauer der mindestens einen Datenübertragungssitzung gegeben ist, die kleiner als die maximale Verzugszeit ist.

9. Verfahren nach einem der vorhergehenden Ansprüche, **dadurch gekennzeichnet, dass** die mindestens eine Datenübertragungssitzung eine semi-persistente Datenübertragungssitzung ist.

10. Verfahren nach einem der vorhergehenden Ansprüche, **dadurch gekennzeichnet, dass** die für die Fahrzeuge (1.1, 1.2) der Fahrzeugkolonne bestimmten Übertragungsressourcen eine half-duplex-Bedingung erfüllen und Ressource-Blöcke, die zwei unmittelbar aufeinanderfolgenden Fahrzeugen (1.1, 1.2) der Fahrzeugkolonne für das Senden von Informationen zugewiesen werden, zeitlich nicht überlappen.

11. Verfahren nach einem der vorhergehenden Ansprüche, **dadurch gekennzeichnet, dass** dem mindestens einen Fahrzeugpaar (1.1, 1.2) der Fahrzeugkolonne mindestens zwei Datenübertragungssitzungen als Übertragungsressourcen für das Senden und/oder Empfangen von Informationen mittels der Fahrzeug-zu-Fahrzeug-Kommunikation zugewiesen sind, wobei die mindestens zwei Datenübertragungssitzungen dieselbe Periodendauer aber unterschiedliche Anfangszeiten aufweisen und der zeitliche Abstand zwischen den Anfangszeiten kleiner als die Periodendauer ist.

12. Verfahren nach einem der vorhergehenden Ansprüche, **dadurch gekennzeichnet, dass** der mindestens eine kinematische Kontrollparameter zumindest mit der Beschleunigung des ersten Fahrzeugs (1.1) des mindestens einen Fahrzeugpaars (1.1, 1.2) gebildet ist.

13. Verfahren nach einem der vorhergehenden Ansprüche, **dadurch gekennzeichnet, dass** aufgrund mindestens eines externen Ereignisses während der Reise die kinematischen Zielvorgaben neu bestimmt werden und die Schritte (a) und (b) mit den neuen kinematischen Zielvorgaben, die die vor dem Zeitpunkt des Eintritts des mindestens einen externen Ereignisses bestimmten kinematischen Zielvorgaben ersetzen, durchgeführt werden, sodass die mindestens eine maximale Verzugszeit für die Fahrzeug-zu-Fahrzeug-Kommunikation und die dem mindestens einen Fahrzeugpaar (1.1, 1.2) der Fahrzeugkolonne zugewiesenen Übertragungsressourcen für die Fahrzeug-zu-Fahrzeug Kommunikation dem tatsächlichen Reiseverlauf angepasst werden.

14. System umfassend einen Fahrzeugkolonnenmanager, der zur Durchführung eines Verfahrens nach einem der vorangegangen Ansprüche ausgebildet ist, wobei der Fahrzeugkolonnenmanager durch eine Recheneinheit gebildet ist.

15. Computerprogrammprodukt, das ein Computerprogramm aufweist, das Softwaremittel zum Durchführen eines Verfahrens nach einem der Ansprüche aufweist, wenn das Computerprogramm in einer Recheneinheit abläuft.

**Claims**

1. A method for controlling a vehicle platoon comprising at least two vehicles (1.1, 1.2) forming at least one vehicle pair, wherein the at least one vehicle pair comprises a first vehicle (1.1) and a second vehicle (1.2) and the first vehicle (1.1) is arranged immediately preceding the second vehicle (1.2) in the vehicle platoon,

   wherein the at least two vehicles (1.1, 1.2) of the vehicle platoon are each formed with a communication system configured to send and/or receive information by means of vehicle-to-vehicle communication and a measuring device configured to detect values for at least one kinematic state parameter,
   and the second vehicle (1.2) performs a feedback control of the controller of the second vehicle (1.2) taking into account values for at least one kinematic control parameter sent by the first vehicle (1.1) and received by the second vehicle (1.1) with the aim of adapting the values for at least one kinematic state parameter measured by means of the at least one measuring device of the second vehicle (1.2) of the at least one pair of vehicles to kinematic targets,
   and in the method

   (a) at least one maximum delay time for vehicle-to-vehicle communication is determined such that at least one cooperative-adaptive-cruise-control (CACC) model-based condition for maintaining platoon stability is satisfied, taking into account kinematic targets and vehicle-specific control parameters, wherein the delay time corresponds to a time distance with which vehicle-to-vehicle information can be sent, and
   (b) the transmission resources for the vehicle-to-vehicle communication between the first vehicle (1.1) and the second (1.2) vehicle are determined, wherein the transmission resources are formed with at least one data transmission session taking into account the at least one maximum delay time,
   (c) and by means of the transmission resources for the vehicle-to-vehicle communication, the values for the at least one kinematic control parameter are transmitted as information with a time distance smaller than the at least one maximum delay time by the first vehicle (1.1) of the at least one vehicle pair and can be received by the second vehicle (1.2) of the at least one vehicle pair.

2. The method according to claim 1, **characterized in that** at least the first vehicle (1.1) of the at least one pair of vehicles receives information about the transmission resources determined for the vehicle-to-vehicle communication and, according to this information, the values for the at least one kinematic control parameter are transmitted by the first vehicle (1.1) and can be received by the second vehicle (1.2).

3. The method according to claim 1 or 2, **characterized in that** the kinematic targets are determined taking into account trip target parameters and/or vehicle-specific control parameters provided at least in part by vehicles of the vehicle platoon.

4. The method according to any of the preceding claims,
   **characterized in that** during the formation of the vehicle platoon, a vehicle identification number is assigned to each vehicle (1.1, 1.2) of the vehicle platoon and travel targets are determined, wherein steps comprising the formation of the vehicle platoon begin temporally before the determination of the kinematic targets and/or again after the occurrence of

5. The method according to any of the preceding claims,
**characterized in that** the travel destination parameters are formed with at least one or more travel destinations, one or more travel routes, the maximum speeds allowed along the one or more travel routes, and/or traffic information.

6. The method according to any of the preceding claims, **characterized in that** the kinematic targets are formed at least with target values predetermined along a travel route for the speeds of the vehicles (1.1, 1.2) of the at least one vehicle pair (1.1, 1. 2), the distance between the first vehicle (1.1) and the second vehicle (1.2) of the at least one vehicle pair (1.1, 1.2) and/or the time interval between the first vehicle (1.1) and the second vehicle (1.2) of the at least one vehicle pair (1.1, 1.2).
and/or
the kinematic state parameters are formed at least with time-dependent measured values for the speed of the first vehicle (1.1) and/or of the second vehicle (1.2) of the at least one vehicle pair (1.1, 1.2), the distance between the first vehicle (1.1) and the second vehicle (1.2) of the at least one vehicle pair (1.1, 1.2) and/or the time interval between the first vehicle (1.1) and the second vehicle (1.2) of the at least one vehicle pair (1.1, 1.2).

7. The method according to any of the preceding claims, **characterized in that** the vehicle-specific control parameters are formed at least with vehicle identification numbers, model parameters of a regulator and/or model parameters of a control loop.

8. The method according to any of the preceding claims,
**characterized in that** the at least one data transmission session is formed with a plurality of resource blocks arranged periodically in time, wherein the distance in time between adjacent resource blocks arranged immediately one after the other in time is given by a period duration of the at least one data transmission session that is smaller than the maximum delay time.

9. The method according to any of the preceding claims,
**characterized in that** the at least one data transfer session is a semi-persistent data transfer session.

10. The method according to any of the preceding claims,
**characterized in that** the transmission resources determined for the vehicles (1.1, 1.2) of the vehicle platoon satisfy a half-duplex condition and resource blocks allocated to two immediately successive vehicles (1.1, 1.2) of the vehicle platoon for sending information do not overlap in time.

11. The method according to any of the preceding claims, **characterized in that** the at least one vehicle pair (1.1, 1.2) of the vehicle platoon is assigned at least two data transmission sessions as transmission resources for sending and/or receiving information by means of vehicle-to-vehicle communication, wherein the at least two data transmission sessions have the same period duration but different start times and the distance in time between the start times is smaller than the period duration.

12. The method according to any of the preceding claims,
**characterized in that** the at least one kinematic control parameter is formed at least with the acceleration of the first vehicle (1.1) of the at least one pair of vehicles (1.1, 1.2).

13. The method according to any of the preceding claims,
**characterized in that** due to at least one external event during the trip, the kinematic targets are redetermined and steps (a) and (b) are performed with the new kinematic targets replacing the kinematic targets determined before the time of the occurrence of the at least one external event, such that the at least one maximum delay time for vehicle-to-vehicle communication and the transmission resources allocated to the at least one vehicle pair (1. 1, 1.2) of the vehicle platoon for the vehicle-to-vehicle communication are adapted to the actual travel course.

14. A system comprising a vehicle platoon manager designed to perform a method according to any of the preceding claims, wherein the vehicle platoon manager is constituted by a computing unit.

15. A computer program product comprising a computer program having software means for performing a method according to any of claims when the computer program executes in a computing unit.

**Revendications**

1. Procédé permettant le contrôle d'une colonne de véhicules comportant au moins deux véhicules (1.1, 1.2) qui forment au moins une paire de véhicules, l'au moins une paire de véhicules comprenant un premier véhicule (1.1) et un second véhicule (1.2) et le premier véhicule (1.1) étant disposé immédiatement avant le second véhicule (1.2) dans la colonne de véhicules,

les au moins deux véhicules (1.1, 1.2) de la colonne de véhicules étant respectivement formés avec un système de communication configuré pour envoyer et/ou pour recevoir des informations au moyen d'une communication de véhicule à véhicule, et un dispositif de mesure configuré pour enregistrer des valeurs pour au moins un paramètre d'état cinématique,
et le second véhicule (1.2) réalisant une régulation de la commande du second véhicule (1.2) en tenant compte de valeurs envoyées par le premier véhicule (1.1) et reçues par le second véhicule (1.1) pour au moins un paramètre de contrôle cinématique dans le but d'aligner les valeurs, mesurées au moyen de l'au moins un dispositif de mesure du second véhicule (1.2) de l'au moins une paire de véhicules, pour au moins un paramètre d'état cinématique sur des objectifs cibles cinématiques,
et dans lequel procédé

(a) au moins un temps de retard maximal pour la communication de véhicule à véhicule est déterminé de sorte qu'au moins une condition basée sur un modèle de régulateur de vitesse adaptatif coopératif (CACC) et destinée à assurer la stabilité de la colonne en tenant compte d'objectifs cibles cinématiques et de paramètres de commande spécifiques au véhicule est remplie, le temps de retard correspondant à un intervalle de temps avec lequel des informations peuvent être envoyées de véhicule à véhicule, et
(b) les ressources de transmission pour la communication de véhicule à véhicule entre le premier véhicule (1.1) et le second (1.2) véhicule sont déterminées, les ressources de transmission étant formées avec au moins une session de transmission de données en tenant compte de l'au moins un temps de retard maximal,
(c) et, au moyen des ressources de transmission pour la communication de véhicule à véhicule, les valeurs pour l'au moins un paramètre de contrôle cinématique peuvent être envoyées, depuis le premier véhicule (1.1) de l'au moins une paire de véhicules, en tant qu'informations comportant un intervalle de temps inférieur à l'au moins un temps de retard maximal, et peuvent être reçues par le second véhicule (1.2) de l'au moins une paire de véhicules.

2. Procédé selon la revendication 1, **caractérisé en ce qu'**au moins le premier véhicule (1.1) de l'au moins une paire de véhicules reçoit des informations concernant les ressources de transmission déterminées pour la communication de véhicule à véhicule et, conformément auxdites informations, les valeurs pour l'au moins un paramètre de contrôle cinématique peuvent être envoyées par le premier véhicule (1.1) et peuvent être reçues par le second véhicule (1.2).

3. Procédé selon la revendication 1 ou 2, **caractérisé en ce que** les objectifs cibles cinématiques sont déterminés en tenant compte de paramètres de destination et/ou de paramètres de commande spécifiques au véhicule, lesquels sont fournis au moins en partie par des véhicules de la colonne de véhicules.

4. Procédé selon l'une des revendications précédentes, **caractérisé en ce que,** pendant la formation de la colonne de véhicules, un numéro d'identification de véhicule est associé à chaque véhicule (1.1, 1.2) de la colonne de véhicules et des objectifs de destination sont déterminés, des étapes comprenant la formation de la colonne de véhicules commençant dans le temps avant la détermination des objectifs cibles cinématiques et/ou de nouveau après la survenance d'un événement externe.

5. Procédé selon l'une des revendications précédentes,
**caractérisé en ce que** les paramètres de destination sont formés au moins avec une ou plusieurs destinations, un ou plusieurs trajets, les vitesses maximales autorisées le long du ou des trajets et/ou des informations concernant la circulation.

6. Procédé selon l'une des revendications précédentes,
**caractérisé en ce que** les objectifs cibles cinématiques sont formés au moins avec des valeurs cibles prédéfinies le long d'un trajet pour les vitesses des véhicules (1.1, 1.2) de l'au moins une paire de véhicules (1.1, 1.2), la distance entre le premier véhicule (1.1) et le second véhicule (1.2) de l'au moins une paire de véhicules (1.1, 1.2) et/ou l'intervalle de temps entre le premier véhicule (1.1) et le second véhicule (1.2) de l'au moins une paire de véhicules (1.1, 1.2)
et/ou
les paramètres d'état cinématiques sont formés au moins avec des valeurs mesurées en fonction du temps pour la vitesse du premier véhicule (1.1) et/ou du second véhicule (1.2) de l'au moins une paire de véhicules (1.1, 1.2), la distance entre le premier véhicule (1.1) et le second véhicule (1.2) de l'au moins une paire de véhicules (1.1, 1.2) et/ou l'intervalle de temps entre le premier véhicule (1.1) et le second véhicule (1.2) de l'au moins une paire de véhicules (1.1, 1.2).

7. Procédé selon l'une des revendications précédentes,

**caractérisé en ce que** les paramètres de commande spécifiques au véhicule sont formés au moins avec des numéros d'identification de véhicule, des paramètres de modèle d'un régulateur et/ou des paramètres de modèle d'un circuit de régulation.

8. Procédé selon l'une des revendications précédentes,
**caractérisé en ce que** l'au moins une session de transmission de données est formée avec plusieurs blocs de ressources disposés périodiquement dans le temps, l'intervalle de temps entre des blocs de ressources adjacents disposés immédiatement l'un après l'autre dans le temps étant donné par une durée de période de l'au moins une session de transmission de données, laquelle durée de période est inférieure au temps de retard maximal.

9. Procédé selon l'une des revendications précédentes,
**caractérisé en ce que** l'au moins une session de transmission de données est une session de transmission de données semi-persistante.

10. Procédé selon l'une des revendications précédentes,
**caractérisé en ce que** les ressources de transmission déterminées pour les véhicules (1.1, 1.2) de la colonne de véhicules remplissent une condition de semi-duplex et des blocs de ressources, lesquels sont attribués à deux véhicules (1.1, 1.2) immédiatement l'un derrière l'autre de la colonne de véhicules pour l'envoi d'informations, ne se chevauchent pas dans le temps.

11. Procédé selon l'une des revendications précédentes,
**caractérisé en ce qu'**au moins deux sessions de transmission de données sont attribuées à l'au moins une paire de véhicules (1.1, 1.2) de la colonne de véhicules en tant que ressources de transmission pour l'envoi et/ou la réception d'informations au moyen de la communication de véhicule à véhicule, les au moins deux sessions de transmission de données présentant la même durée de période mais des heures de début différentes et l'intervalle de temps entre les heures de début étant inférieur à la durée de période.

12. Procédé selon l'une des revendications précédentes,
**caractérisé en ce que** l'au moins un paramètre de contrôle cinématique est formé au moins avec l'accélération du premier véhicule (1.1) de l'au moins une paire de véhicules (1.1, 1.2).

13. Procédé selon l'une des revendications précédentes, **caractérisé en ce que,** en raison d'au moins un événement externe pendant le voyage, les objectifs cibles cinématiques sont déterminés à nouveau et les étapes (a) et (b) sont réalisées avec les nouveaux objectifs cibles cinématiques qui remplacent les objectifs cibles cinématiques déterminés avant le moment de survenance de l'au moins un événement externe, de sorte que l'au moins un temps de retard maximal pour la communication de véhicule à véhicule et les ressources de transmission attribuées à l'au moins une paire de véhicules (1.1, 1.2) de la colonne de véhicules pour la communication de véhicule à véhicule sont adaptés à l'itinéraire réel.

14. Système comprenant un gestionnaire de colonne de véhicules configuré pour la réalisation d'un procédé selon l'une des revendications précédentes, le gestionnaire de colonne de véhicules étant formé par une unité de calcul.

15. Produit programme informatique présentant un programme informatique présentant un moyen logiciel pour la réalisation d'un procédé selon l'une des revendications lorsque le programme informatique est exécuté dans une unité de calcul.

Fig. 1

Fig. 2

EP 3 957 094 B1

Drahtlose Verbindung
(Wireless link) $U_1(s)$

Drahtlose Verbindung
(Wireless link) $U_2(s)$

$U_1(s)$ $U_1(s)$ $G_1(s)$ $P_1(s)$

$D_2(s)$ $F_2(s)$ $K_2(s)$ $G_2(s)$ $P_2(s)$ $H_2(s)$

$D_3(s)$ $F_3(s)$ $K_3(s)$ $G_3(s)$ $H_3(s)$

Radar

Radar

1.1

1.2

1.3

Fig. 3

EP 3 957 094 B1

Navigation

FKM

BS

1.1

1.2

1.N

Absichtserklärung
(PlatoonFormationRequest(1))

Absichtserklärung
(PlatoonFormationRequest(2))

Absichtserklärung
(PlatoonFormationRequest(N))

Routenanfrage

Route mit max.
Geschwindigkeiten

Fig. 4

EP 3 957 094 B1

Navigation

FKM

BS

1.1

1.2

1.N

Formationserklärung
(PlatoonFormationResponse(1))

Formationserklärung
(PlatoonFormationResponse(2))

Formationserklärung
(PlatoonFormationResponse(N))

Fig. 5

Fig. 6

Navigation

FKM

BS

1.1

1.2

1.N

Zustimmungserklärung
(PlatoonACK(1))

Zustimmungserklärung
(PlatoonACK(2))

Zustimmungserklärung
(PlatoonACK(N))

Formation
abgeschlossen

max. Verzugszeiten

Aufforderung zur
Zuweisung der
Übertragungsressourcen
(SPS allocation request)

Fig. 7

Navigation

FKM

BS

1.1

1.2

1.N

Aufforderung zur Zuweisung der Übertragungsressourcen (SPS allocation request)

Bestimmung der Übertragungsressourcen (SPS Scheduling /Scheduler)

Zugewiesene Übertragungsressourcen (Tx/Rx SPS Grants)

Zugewiesene Übertragungsressourcen (Tx/Rx SPS Grants)

Zugewiesene Übertragungsressourcen (Tx/Rx SPS Grants)

Fig. 8

EP 3 957 094 B1

EP 3 957 094 B1

Navigation

FKM

BS

1.1

1.2

1.N

Zugewiesene Übertragungsressourcen (Tx/Rx SPS Grants)

Zugewiesene Übertragungsressourcen (Tx/Rx SPS Grants)

Zugewiesene Übertragungsressourcen (Tx/Rx SPS Grants)

Senden/Empfangen kinematischer Kontrollparameter, Regelung

a.1 Kinematischer Kontrollparameter (Kinematic / Control Update)

a.2 Kinematischer Kontrollparameter (Kinematic / Control Update)

D

b.1 Kinematischer Kontrollparameter (Kinematic / Control Update)

b.2 Kinematischer Kontrollparameter (Kinematic / Control Update)

D

Fig. 9

Schritt (1)

Schritt (2)

Schritt (3)

Schritt (4)

Externes
Ereignis
?

Ja

Nein

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VICTOR S. DOLK et al.** Event-Triggered Control for String-Stable Vehicle Platooning. *IEEE Transactions on Intelligent Transportation Systems,* vol. 18 (12), 3486

- **V. NAUS et al.** String-Stable CACC Design and Experimental Validation: A Frequency Domain-Approach. *IEEE Transactions on vehicular Technology,* November 2010, 4268-4279